# EUROPEAN PATENT APPLICATION

(11) **EP 4 648 445 A1**
(43) Date of publication of application: **12.11.2025**
(21) Application number: 24744234.6
(22) Date of filing: 16.01.2024
(51) Int. Cl.: H04W 4/029

(54) **NTN POSITIONING METHOD AND POSITIONING APPARATUS**

(30) Priority: 20.01.2023 CN 202310201181; 16.02.2023 CN 202310166640
(71) Applicant: Huawei Technologies Co., Ltd., Shenzhen, Guangdong 518129 (CN)
(72) Inventor: FAN, Liangliang, Shenzhen, Guangdong 518129 (CN); XU, Haibo, Shenzhen, Guangdong 518129 (CN); XUE, Lixia, Shenzhen, Guangdong 518129 (CN)
(74) Representative: Thun, Clemens
(86) International application number: PCT/CN2024/072490
(87) International publication number: WO 2024/153059

(57) **Abstract**

This application provides a positioning method and a positioning apparatus for an NTN. The method includes: A first device determines a location of a terminal device with reference to a measurement result of an uplink positioning reference signal based on an offset, reported by the terminal device, between a start location of a subframe in which a downlink positioning reference signal is located and a start location of an uplink subframe that has a same frame number and a same subframe number as the subframe and that is closest to the subframe, or based on an offset, reported by the terminal device, between a start location of a subframe in which a downlink positioning reference signal is located and a start location of an uplink subframe in which the uplink positioning reference signal sent by the terminal device is located. Therefore, accuracy of the location of the terminal device is improved.

## Description

This application claims priority to Chinese Patent Application No. 202310201181.3, filed with the China National Intellectual Property Administration on January 20, 2023 and entitled "COMMUNICATION METHOD", and claims priority to Chinese Patent Application No. 202310166640.9, filed with the China National Intellectual Property Administration on February 16, 2023 and entitled "POSITIONING METHOD AND POSITIONING APPARATUS FOR NTN", which are incorporated herein by reference in their entireties.

### TECHNICAL FIELD

This application relates to the field of communication technologies, and more specifically, to a positioning method and a positioning apparatus for a non-terrestrial network (non-terrestrial network, NTN).

### BACKGROUND

A satellite network is a hot topic in research in the world today. A satellite communication technology has been increasingly mature. For example, a non-terrestrial network (non-terrestrial network, NTN) is a network or a network segment that implements communication by using a radio frequency on a satellite, and can provide wider coverage. In addition, a satellite base station is not vulnerable to a natural disaster or external force.

Coverage of an NTN cell in the NTN is far larger than that of a terrestrial network (terrestrial network, TN) cell. The network needs to verify a location of a terminal, to determine whether the terminal camps on a proper core network. A propagation delay of the NTN is far greater than that of the TN cell. An existing solution for measuring a location of a terminal device in a TN scenario cannot meet a requirement in an NTN scenario.

In the NTN scenario, a positioning method is urgently needed to implement positioning or location verification of the terminal device.

### SUMMARY

This application provides a positioning method and a positioning apparatus for an NTN, to position a terminal device or verify location information of a terminal device in an NTN, to meet a positioning requirement in an NTN scenario.

According to a first aspect, a positioning method for an NTN is provided. The method may be performed by a first device, or may be performed by a chip or a circuit disposed in a first device. This is not limited in this application.

In this application, the first device may be a location management function (location management function, LMF), or may be a network device. The network device may be an access network device, a transmission and reception point (transmission and reception point, TRP), or the like.

The method includes: receiving a first message sent by a terminal device, where the first message carries a result of measuring a downlink positioning reference signal by the terminal device, the first message includes an offset between a start location of a first subframe and a start location of a second subframe, the first subframe is a downlink subframe in which the downlink positioning reference signal is located, and the second subframe is an uplink subframe that has a same frame number and a same subframe number as the first subframe and that is closest to the first subframe, or the second subframe is an uplink subframe in which an uplink positioning reference signal sent by the terminal device is located; and determining location information of the terminal device based on the first message and a measurement result of the uplink positioning reference signal.

According to the foregoing technical solution, in an NTN scenario, the first device determines a location of the terminal device with reference to the measurement result of the uplink positioning reference signal based on the offset, reported by the terminal device, between the start location of the subframe in which the downlink positioning reference signal is located and the start location of the uplink subframe that has the same frame number and the same subframe number as the subframe and that is closest to the subframe, or based on the offset, reported by the terminal device, between the start location of the subframe in which the downlink positioning reference signal is located and the start location of the uplink subframe in which the uplink positioning reference signal sent by the terminal device is located. Therefore, accuracy of the location of the terminal device is improved.

With reference to the first aspect, in a possible implementation, the first device receives a second message sent by the network device. The second message includes the measurement result of the uplink positioning reference signal. The second message includes an offset between a start location of a third subframe and a start location of a fourth subframe. The third subframe is an uplink subframe in which the uplink positioning reference signal is located. The fourth subframe is a downlink subframe that has a same frame number and a same subframe number as the third subframe and that is closest to the third subframe. Alternatively, the fourth subframe is a downlink subframe in which the downlink positioning reference signal sent by the network device is located.

In this technical solution, when the first device is the location management function, the first device receives the measurement result of the uplink positioning reference signal from the network device. Therefore, flexibility of a positioning capability is improved.

According to a second aspect, a positioning method for an NTN is provided. The method may be performed by a terminal device, or may be performed by a chip or a circuit disposed in a terminal device. This is not limited in this application.

The method includes: The terminal device performs a measurement on a downlink positioning reference signal of a network device. The terminal device sends a first message to a first device. The first message carries a result of the measurement. The first message includes an offset between a start location of a first subframe and a start location of a second subframe. The first subframe is a downlink subframe in which the downlink positioning reference signal is located. The second subframe is an uplink subframe that has a same frame number and a same subframe number as the first subframe and that is closest to the first subframe. Alternatively, the second subframe is an uplink subframe in which an uplink positioning reference signal sent by the terminal device is located. The first message is used by the first device to determine location information of the terminal device.

In this application, the first device may be a location management function (location management function, LMF), or may be the network device.

According to the foregoing technical solution, in an NTN scenario, after performing the measurement on the downlink positioning reference signal, the terminal device reports, to the first device, the offset between the start location of the subframe in which the downlink positioning reference signal is located and the start location of the uplink subframe that has the same frame number and the same subframe number as the subframe and that is closest to the subframe, or the offset, reported by the terminal device, between the start location of the subframe in which the downlink positioning reference signal is located and the start location of the uplink subframe in which the uplink positioning reference signal sent by the terminal device is located. After receiving reporting of the terminal device, the first device determines a location of the terminal device with reference to a measurement result of the uplink positioning reference signal. Therefore, accuracy of the location of the terminal device is improved.

According to a third aspect, a positioning method for an NTN is provided. The method may be performed by a network device, or may be performed by a chip or a circuit disposed in a network device. This is not limited in this application.

The method includes: The network device performs a measurement on an uplink positioning reference signal of a terminal device. The network device sends a second message to a first device. The second message carries a result of the measurement. The second message includes an offset between a start location of a third subframe and a start location of a fourth subframe. The third subframe is an uplink subframe in which the uplink positioning reference signal is located. The fourth subframe is a downlink subframe that has a same frame number and a same subframe number as the third subframe and that is closest to the third subframe. Alternatively, the fourth subframe is a downlink subframe in which a downlink positioning reference signal sent by the network device is located. The second message is used by the first device to determine location information of the terminal device.

According to the foregoing technical solution, in an NTN scenario, after performing the measurement on the uplink positioning reference signal, the network device reports the offset between the start location of the subframe in which the uplink positioning reference signal is located and the start location of the downlink subframe that has the same frame number and the same subframe number as the subframe and that is closest to the subframe, or reports the offset between the start location of the subframe in which the uplink positioning reference signal is located and the start location of the downlink subframe in which the sent downlink positioning reference signal is located, so that the first device determines a location of the terminal device with reference to the measurement result of the uplink positioning reference signal. Therefore, accuracy of the location of the terminal device is improved.

According to a fourth aspect, a positioning method for an NTN is provided. The method may be performed by a first device, or may be performed by a chip or a circuit disposed in a first device. This is not limited in this application.

The method includes: The first device receives a third message sent by a terminal device, where the third message carries a result of measuring a downlink positioning reference signal by the terminal device, and the third message includes a difference between a propagation delay of the downlink positioning reference signal and a propagation delay of a reference downlink positioning reference signal; and determines location information of the terminal device based on the third message.

According to the foregoing technical solution, in an NTN scenario, the first device determines a location of the terminal device based on the difference, reported by the terminal device, between the propagation delay of the downlink positioning reference signal and the propagation delay of the reference downlink positioning reference signal. Therefore, accuracy of the location of the terminal device is improved.

According to a fifth aspect, a positioning method for an NTN is provided. The method may be performed by a terminal device, or may be performed by a chip or a circuit disposed in a terminal device. This is not limited in this application.

The method includes: The terminal device performs a measurement on a downlink positioning reference signal of a network device. The terminal device sends a third message to a first device. The third message carries a result of the measurement. The third message includes a difference between a propagation delay of the downlink positioning reference signal and a propagation delay of a reference downlink positioning reference signal. The third message is used by the first device to determine location information of the terminal device.

According to the foregoing technical solution, in an NTN scenario, the terminal device reports the difference between the propagation delay of the downlink positioning reference signal and the propagation delay of the reference downlink positioning reference signal, so that the first device determines a location of the terminal device. Therefore, accuracy of the location of the terminal device is improved.

With reference to the first aspect to the fifth aspect, in a possible implementation, the downlink positioning reference signal is a positioning reference signal PRS, and the uplink positioning reference signal is a channel sounding reference signal SRS.

With reference to the first aspect to the fifth aspect, in a possible implementation, that the terminal device determines the difference between the propagation delay of the downlink positioning reference signal and the propagation delay of the reference downlink positioning reference signal includes: The terminal device determines the propagation delay of the downlink positioning reference signal based on absolute time at which the network device sends the downlink positioning reference signal and absolute time at which the terminal device receives the downlink positioning reference signal.

According to the foregoing technical solution, the terminal device may determine the propagation delay based on the absolute time at which the downlink positioning reference signal is sent and the absolute time at which the downlink positioning reference signal ends.

With reference to the first aspect to the fifth aspect, in a possible implementation, the terminal device receives configuration information of the downlink positioning reference signal, and the terminal device determines, based on the configuration information of the downlink positioning reference signal, the absolute time at which the network device sends the downlink positioning reference signal.

According to the foregoing technical solution, the terminal device may determine, based on the configuration information of the downlink positioning reference signal, the absolute time at which the downlink positioning reference signal is sent.

With reference to the first aspect to the fifth aspect, in a possible implementation, the terminal device receives time sequence information of the network device, and the terminal device determines, based on the time sequence information of the network device and configuration information of the downlink positioning reference signal, the absolute time at which the network device sends the downlink positioning reference signal.

According to the foregoing technical solution, the terminal device may determine, based on the configuration information of the downlink positioning reference signal, the absolute time at which the downlink positioning reference signal is sent. This solution is applicable to a handover scenario. For example, the terminal device is handed over in a process in which the network device verifies the location of the terminal device or the network device positions the location of the terminal device, that is, the terminal device is handed over from one network device to another network device, or the terminal device is handed over because of satellite handover or TRP handover.

With reference to the first aspect to the fifth aspect, in a possible implementation, the terminal device sends timestamp information to the first device. The timestamp information includes any one of the following: a system frame number and a subframe number that are of a reference network device and that correspond to start time of a subframe in which the downlink positioning reference signal is received, a system frame number and a subframe number that are of the reference network device and that correspond to a moment at which the downlink positioning reference signal is received, and a system frame number and a subframe number that are of the reference network device and that correspond to a subframe in which the uplink positioning reference signal is sent.

According to the foregoing technical solution, after receiving the timestamp information, the first device may more quickly determine a location of a TRP corresponding to the system frame number and the subframe number, or may distinguish the measurement result reported by the terminal.

With reference to the first aspect to the fifth aspect, in a possible implementation, the terminal device receives a first request message from the first device, and the terminal device performs the measurement on the downlink positioning reference signal based on the first request message.

According to the foregoing technical solution, the first device may request the terminal device to perform the measurement on the downlink positioning reference signal.

With reference to the first aspect to the fifth aspect, in a possible implementation, the first device includes the network device or the location management function.

According to the foregoing technical solution, a function of the first device may be disposed on the network device, or may be directly performed by the location management function. Therefore, flexibility and applicability of the positioning method are improved.

According to a sixth aspect, a positioning method for an NTN is provided. The method may be performed by a terminal device, or may be performed by a chip or a circuit disposed in a terminal device. This is not limited in this application.

The method includes: The terminal device performs a measurement on a downlink positioning reference signal of a network device. The terminal device sends a third message to a first device. The third message carries a result of the measurement. The third message includes absolute time corresponding to a start location of a fifth subframe or absolute time at which the downlink positioning reference signal arrives. The fifth subframe is a downlink subframe in which the downlink positioning reference signal is located. The third message is used by the first device to determine location information of the terminal device.

According to the foregoing technical solution, after performing the measurement on the downlink positioning reference signal, the terminal device directly reports, to the first device, the absolute time corresponding to the start location of the downlink subframe in which the downlink positioning reference signal is located or the absolute time at which the downlink positioning reference signal arrives, so that the first device measures a location of the terminal device. Therefore, accuracy of the location of the terminal device is improved.

According to a seventh aspect, a positioning method for an NTN is provided. The method may be performed by a terminal device, or may be performed by a chip or a circuit disposed in a terminal device. This is not limited in this application.

The method includes: The terminal device performs a measurement on a downlink positioning reference signal of a network device. The terminal device sends a third message to a first device. The third message carries a result of the measurement. The third message includes an offset between a start location of a sixth subframe and a start location of a seventh subframe, where the sixth subframe is a subframe in which a positioning reference signal of a first network device is located, and the seventh subframe is a subframe in which a positioning reference signal of a reference network device is located. Alternatively, the third message includes a difference between absolute time at which positioning reference information of a first network device arrives and absolute time at which a positioning reference signal of a reference network device arrives. The third message is used by the first device to determine location information of the terminal device. The first network device is a serving network device of the terminal device.

According to the foregoing technical solution, after performing the measurement on the downlink positioning reference signal, the terminal device reports, to the first device, an offset between a start location of a subframe in which a positioning reference signal is located and a start location of a subframe in which a reference positioning reference signal is located, or reports, to the first device, a difference between absolute time of arrival of a subframe in which a positioning reference signal is located and absolute time of arrival of a subframe in which a reference positioning reference signal is located, so that the first device measures a location of the terminal device. Therefore, accuracy of the location of the terminal device is improved.

According to an eighth aspect, a positioning apparatus for an NTN is provided. The method may be a first device, or may be a chip or a circuit disposed in a first device. This is not limited in this application.

In this application, the first device may be a location management function (location management function, LMF), or may be a network device.

The apparatus includes: a transceiver unit, configured to receive a first message sent by a terminal device, where the first message carries a result of measuring a downlink positioning reference signal by the terminal device, the first message includes an offset between a start location of a first subframe and a start location of a second subframe, the first subframe is a downlink subframe in which the downlink positioning reference signal is located, and the second subframe is an uplink subframe that has a same frame number and a same subframe number as the first subframe and that is closest to the first subframe, or the second subframe is an uplink subframe in which an uplink positioning reference signal sent by the terminal device is located; and a processing unit, configured to determine location information of the terminal device based on the first message and a measurement result of the uplink positioning reference signal.

According to the foregoing technical solution, in an NTN scenario, the first device determines a location of the terminal device with reference to the measurement result of the uplink positioning reference signal based on the offset, reported by the terminal device, between the start location of the subframe in which the downlink positioning reference signal is located and the start location of the uplink subframe that has the same frame number and the same subframe number as the subframe and that is closest to the subframe, or based on the offset, reported by the terminal device, between the start location of the subframe in which the downlink positioning reference signal is located and the start location of the uplink subframe in which the uplink positioning reference signal sent by the terminal device is located. Therefore, accuracy of the location of the terminal device is improved.

With reference to the first aspect, in a possible implementation, the transceiver unit is further configured to receive a second message sent by the network device. The second message includes the measurement result of the uplink positioning reference signal. The second message includes an offset between a start location of a third subframe and a start location of a fourth subframe. The third subframe is an uplink subframe in which the uplink positioning reference signal is located. The fourth subframe is a downlink subframe that has a same frame number and a same subframe number as the third subframe and that is closest to the third subframe. Alternatively, the fourth subframe is a downlink subframe in which the downlink positioning reference signal sent by the network device is located.

In this technical solution, when the first device is the location management function, the first device receives the measurement result of the uplink positioning reference signal from the network device. Therefore, flexibility of a positioning capability is improved.

According to a ninth aspect, a positioning apparatus for an NTN is provided. The apparatus may be a terminal device, or may be a chip or a circuit disposed in a terminal device. This is not limited in this application.

The apparatus includes: a processing unit, configured to perform a measurement on a downlink positioning reference signal of a network device; and a transceiver unit, configured to send a first message to a first device. The first message carries a result of the measurement. The first message includes an offset between a start location of a first subframe and a start location of a second subframe. The first subframe is a downlink subframe in which the downlink positioning reference signal is located. The second subframe is an uplink subframe that has a same frame number and a same subframe number as the first subframe and that is closest to the first subframe. Alternatively, the second subframe is an uplink subframe in which an uplink positioning reference signal sent by the terminal device is located. The first message is used by the first device to determine location information of the terminal device.

In this application, the first device may be a location management function (location management function, LMF), or may be a network device.

According to the foregoing technical solution, in an NTN scenario, after performing the measurement on the downlink positioning reference signal, the terminal device reports the offset between the start location of the subframe in which the downlink positioning reference signal is located and the start location of the uplink subframe that has the same frame number and the same subframe number as the subframe and that is closest to the subframe, or reports the offset, reported by the terminal device, between the start location of the subframe in which the downlink positioning reference signal is located and the start location of the uplink subframe in which the uplink positioning reference signal sent by the terminal device is located, so that the first device determines a location of the terminal device with reference to a measurement result of the uplink positioning reference signal. Therefore, accuracy of the location of the terminal device is improved.

According to a tenth aspect, a positioning apparatus for an NTN is provided. The apparatus may be a network device, or may be a chip or a circuit disposed in a network device. This is not limited in this application.

The apparatus includes: a processing unit, configured to perform a measurement on an uplink positioning reference signal of a terminal device; and a transceiver unit, configured to send a second message to a first device. The second message carries a result of the measurement. The second message includes an offset between a start location of a third subframe and a start location of a fourth subframe. The third subframe is an uplink subframe in which the uplink positioning reference signal is located. The fourth subframe is a downlink subframe that has a same frame number and a same subframe number as the third subframe and that is closest to the third subframe. Alternatively, the fourth subframe is a downlink subframe in which a downlink positioning reference signal sent by the network device is located. The second message is used by the first device to determine location information of the terminal device.

According to the foregoing technical solution, in an NTN scenario, after performing the measurement on the uplink positioning reference signal, the network device reports the offset between the start location of the subframe in which the uplink positioning reference signal is located and the start location of the downlink subframe that has the same frame number and the same subframe number as the subframe and that is closest to the subframe, or reports the offset between the start location of the subframe in which the uplink positioning reference signal is located and the start location of the downlink subframe in which the sent downlink positioning reference signal is located, so that the first device determines a location of the terminal device with reference to the measurement result of the uplink positioning reference signal. Therefore, accuracy of the location of the terminal device is improved.

According to an eleventh aspect, a positioning apparatus for an NTN is provided. The apparatus may be a first device, or may be a chip or a circuit disposed in a first device. This is not limited in this application.

The apparatus includes: a transceiver unit, configured to receive a third message sent by a terminal device, where the third message carries a result of measuring a downlink positioning reference signal by the terminal device, and the third message includes a difference between a propagation delay of the downlink positioning reference signal and a propagation delay of a reference downlink positioning reference signal; and a processing unit, configured to determine location information of the terminal device based on the third message.

According to the foregoing technical solution, in an NTN scenario, the first device determines a location of the terminal device based on the difference, reported by the terminal device, between the propagation delay of the downlink positioning reference signal and the propagation delay of the reference downlink positioning reference signal. Therefore, accuracy of the location of the terminal device is improved.

According to a twelfth aspect, a positioning apparatus for an NTN is provided. The apparatus may be a terminal device, or may be a chip or a circuit disposed in a terminal device. This is not limited in this application.

The apparatus includes: a processing unit, configured to perform a measurement on a downlink positioning reference signal of a network device; and a transceiver unit, configured to send a third message to a first device. The third message carries a result of the measurement. The third message includes a difference between a propagation delay of the downlink positioning reference signal and a propagation delay of a reference downlink positioning reference signal. The third message is used by the first device to determine location information of the terminal device.

According to the foregoing technical solution, in an NTN scenario, the terminal device reports the difference between the propagation delay of the downlink positioning reference signal and the propagation delay of the reference downlink positioning reference signal, so that the first device determines a location of the terminal device. Therefore, accuracy of the location of the terminal device is improved.

With reference to the eighth aspect to the twelfth aspect, in a possible implementation, the downlink positioning reference signal is a positioning reference signal PRS, and the uplink positioning reference signal is a channel sounding reference signal SRS.

With reference to the eighth aspect to the twelfth aspect, in a possible implementation, the processing unit is specifically configured to determine the propagation delay of the downlink positioning reference signal based on absolute time at which the network device sends the downlink positioning reference signal and absolute time at which the terminal device receives the downlink positioning reference signal.

According to the foregoing technical solution, the terminal device may determine the propagation delay based on the absolute time at which the downlink positioning reference signal is sent and the absolute time at which the downlink positioning reference signal ends.

With reference to the eighth aspect to the twelfth aspect, in a possible implementation, the transceiver unit is further configured to receive configuration information of the downlink positioning reference signal. The processing unit is further configured to determine, based on the configuration information of the downlink positioning reference signal, the absolute time at which the network device sends the downlink positioning reference signal.

According to the foregoing technical solution, the terminal device may determine, based on the configuration information of the downlink positioning reference signal, the absolute time at which the downlink positioning reference signal is sent.

With reference to the eighth aspect to the twelfth aspect, in a possible implementation, the transceiver unit is further configured to receive time sequence information of the network device. The processing unit is further configured to determine, based on the time sequence information of the network device and configuration information of the downlink positioning reference signal, the absolute time at which the network device sends the downlink positioning reference signal.

According to the foregoing technical solution, the terminal device may determine, based on the configuration information of the downlink positioning reference signal, the absolute time at which the downlink positioning reference signal is sent. This solution is applicable to a handover scenario. For example, the terminal device is handed over in a process in which the network device verifies the location of the terminal or the network device positions the location of the terminal device, that is, the terminal device is handed over from one network device to another network device, or the terminal device is handed over because of satellite handover or TRP handover.

With reference to the eighth aspect to the twelfth aspect, in a possible implementation, the transceiver unit is further configured to send timestamp information to the first device. The timestamp information includes any one of the following: a system frame number and a subframe number that are of a reference network device and that correspond to start time of a subframe in which the downlink positioning reference signal is received, a system frame number and a subframe number that are of the reference network device and that correspond to a moment at which the downlink positioning reference signal is received, and a system frame number and a subframe number that are of the reference network device and that correspond to a subframe in which the uplink positioning reference signal is sent.

According to the foregoing technical solution, after receiving the timestamp information, the first device may more quickly determine a location of a TRP corresponding to the system frame number and the subframe number, or may distinguish the measurement result reported by the terminal.

With reference to the eighth aspect to the twelfth aspect, in a possible implementation, the transceiver unit is further configured to receive a first request message from the first device. The processing unit is further configured to perform the measurement on the downlink positioning reference signal based on the first request message.

According to the foregoing technical solution, the first device may request the terminal device to perform the measurement on the downlink positioning reference signal.

With reference to the eighth aspect to the twelfth aspect, in a possible implementation, the first device includes the network device or the location management function.

According to the foregoing technical solution, a function of the first device may be disposed on the network device, or may be directly performed by the location management function. Therefore, flexibility and applicability of the positioning method are improved.

According to a thirteenth aspect, a positioning apparatus for an NTN is provided. The apparatus may be a terminal device, or may be a chip or a circuit disposed in a terminal device. This is not limited in this application.

The apparatus includes: a processing unit, configured to perform a measurement on a downlink positioning reference signal of a network device; and a transceiver unit, configured to send a third message to a first device. The third message carries a result of the measurement. The third message includes absolute time corresponding to a start location of a fifth subframe or absolute time at which the downlink positioning reference signal arrives. The fifth subframe is a downlink subframe in which the downlink positioning reference signal is located. The third message is used by the first device to determine location information of the terminal device.

According to the foregoing technical solution, after performing the measurement on the downlink positioning reference signal, the terminal device directly reports, to the first device, the absolute time corresponding to the start location of the downlink subframe in which the downlink positioning reference signal is located or the absolute time at which the downlink positioning reference signal arrives, so that the first device measures a location of the terminal device. Therefore, accuracy of the location of the terminal device is improved.

According to a fourteenth aspect, a positioning apparatus for an NTN is provided. The apparatus may be a terminal device, or may be a chip or a circuit disposed in a terminal device. This is not limited in this application.

The apparatus includes: a processing unit, configured to perform a measurement on a downlink positioning reference signal of a network device; and a transceiver unit, configured to send a third message to a first device. The third message carries a result of the measurement. The third message includes an offset between a start location of a sixth subframe and a start location of a seventh subframe, where the sixth subframe is a subframe in which a positioning reference signal of a first network device is located, and the seventh subframe is a subframe in which a positioning reference signal of a reference network device is located. Alternatively, the third message includes a difference between absolute time at which positioning reference information of a first network device arrives and absolute time at which a positioning reference signal of a reference network device arrives. The third message is used by the first device to determine location information of the terminal device. The first network device is a serving network device of the terminal device.

According to the foregoing technical solution, after performing the measurement on the downlink positioning reference signal, the terminal device reports, to the first device, an offset between a start location of a subframe in which a positioning reference signal is located and a start location of a subframe in which a reference positioning reference signal is located, or reports, to the first device, a difference between absolute time of arrival of a subframe in which a positioning reference signal is located and absolute time of arrival of a subframe in which a reference positioning reference signal is located, so that the first device measures a location of the terminal device. Therefore, accuracy of the location of the terminal device is improved.

According to a fifteenth aspect, a positioning apparatus for an NTN is provided. The apparatus is configured to perform the method according to the first aspect. Specifically, the positioning apparatus for an NTN may include units and/or modules configured to perform the method according to any one of the implementations of the first aspect to the seventh aspect, for example, a processing unit and/or a communication unit.

In an implementation, the positioning apparatus for an NTN includes the communication unit and the processing unit. The communication unit may be a transceiver or an input/output interface. The processing unit may be at least one processor. Optionally, the transceiver may be a transceiver circuit. Optionally, the input/output interface may be an input/output circuit.

In another implementation, the positioning apparatus for an NTN is a chip, a chip system, or a circuit in a network device. When the positioning apparatus for an NTN is the chip, the chip system, or the circuit in the network device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixteenth aspect, a positioning apparatus device for an NTN is provided, includes a processor, and optionally, further includes a memory. The processor is configured to control a transceiver to receive and send signals. The memory is configured to store a computer program. The processor is configured to invoke the computer program from the memory and run the computer program, so that the sending device performs the method according to any one of the possible implementations of the first aspect to the seventh aspect.

Optionally, there are one or more processors, and there are one or more memories.

Optionally, the memory may be integrated with the processor, or the memory and the processor are disposed separately.

Optionally, the first device further includes a transceiver. The transceiver may be specifically a transmitting machine (transmitter) and a receiving machine (receiver).

According to a seventeenth aspect, a computer-readable storage medium is provided. The computer-readable storage medium stores a computer program or code. When the computer program or code is run on a computer, the computer is enabled to perform the method according to any one of the possible implementations of the first aspect to the seventh aspect.

According to an eighteenth aspect, a chip is provided, including at least one processor. The at least one processor is coupled to a memory. The memory is configured to store a computer program. The processor is configured to invoke the computer program from the memory and run the computer program, so that a sending device on which the chip system is installed performs the method according to any one of the possible implementations of the first aspect to the seventh aspect.

The chip may include an input circuit or interface configured to send information or data and an output circuit or interface configured to receive information or data.

According to a nineteenth aspect, a computer program product is provided. The computer program product includes computer program code. When the computer program code is run by a sending device, the method according to any one of the possible implementations of the first aspect to the seventh aspect is performed.

For beneficial effects of the eighth aspect to the nineteenth aspect, refer to the beneficial effects of the first aspect to the seventh aspect. Details are not described again.

### BRIEF DESCRIPTION OF DRAWINGS

FIG. 1 is a diagram of a network architecture applicable to an embodiment of this application;
FIG. 2 is a diagram of an architecture of a communication system applicable to an embodiment of this application;
FIG. 3 is a diagram of an architecture of a communication system applicable to an embodiment of this application;
FIG. 4 is a diagram of an architecture of a communication system applicable to an embodiment of this application;
FIG. 5 is a diagram of an architecture of a communication system applicable to an embodiment of this application;
FIG. 6 is a diagram of an architecture of a communication system applicable to an embodiment of this application;
FIG. 7 is a diagram of a positioning procedure according to this application;
FIG. 8 is a diagram of a frame structure for reporting a measurement result according to this application;
FIG. 9 is a diagram of still another positioning procedure according to this application;
FIG. 10 is a diagram of still another frame structure for reporting a measurement result according to this application;
FIG. 11 is a schematic flowchart of a positioning method for an NTN applicable to an embodiment of this application;
FIG. 12 is a diagram of a frame structure that is applicable to an embodiment of this application and that is used to report a measurement result;
FIG. 13 is a diagram of a frame structure that is applicable to an embodiment of this application and that is used to report a measurement result when downlink frame timing and uplink frame timing are not aligned;
FIG. 14 is a diagram of still another frame structure that is applicable to an embodiment of this application and that is used to report a measurement result;
FIG. 15 is a schematic flowchart of still another positioning method for an NTN applicable to an embodiment of this application;
FIG. 16 is a diagram of sending time and receiving time of a downlink positioning reference signal applicable to an embodiment of this application;
FIG. 17 is still another diagram of sending time and receiving time of a downlink positioning reference signal applicable to an embodiment of this application;
FIG. 18 is a diagram of still another frame structure that is applicable to an embodiment of this application and that is used to report a measurement result;
FIG. 19 is a diagram of a structure of a communication apparatus according to an embodiment of this application; and
FIG. 20 is a diagram of a communication architecture according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (LTE) system, a long term evolution-advanced (LTE-A) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a next-generation communication system (for example, a 5th generation (5th generation, 5G) communication system), a converged system of a plurality of access systems, an evolved system, three major application scenarios of a 5G mobile communication system: enhanced mobile broadband (enhanced Mobile Broadband, eMBB), ultra-reliable low-latency communication (ultra-reliable low-latency communication, URLLC), and enhanced machine type communication (enhanced Machine Type Communication, eMTC), or a new communication system emerging in the future. The technical solutions provided in this application may be further applied to a future communication system, for example, a 6th generation mobile communication system. This is not limited in this application.

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle-to-X (vehicle-to-X, V2X, where X may represent everything). For example, V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

A network device in embodiments of this application may also be referred to as a (radio) access network (radio access network, (R)AN) device. The (R)AN can manage a radio resource, provide an access service for user equipment, and complete forwarding of data of the user equipment between the user equipment and a core network. The (R)AN may also be understood as a base station in a network, and is an apparatus that is deployed in a radio access network to provide a wireless communication function for a mobile station (mobile station, MS).

For example, the access network device in embodiments of this application may be any communication device that has a wireless transceiver function and that is configured to communicate with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a gNB or a transmission point (TRP or TP) in a 5G system like an NR system, or one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point. It may be understood that all or some functions of the access network device in this application may alternatively be implemented by using a software function running on hardware, or may be implemented by using a virtualization function instantiated on a platform (for example, a cloud platform).

In some deployments, the gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

A terminal device in embodiments of this application may also be referred to as user equipment (user equipment, UE), a terminal, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction. In a broad sense, the wearable intelligent device includes a full-featured and large-sized device that can implement all or some functions without depending on a smartphone, for example, a smart watch or smart glasses, and a device that is dedicated to only one type of application function and needs to work with another device such as a smartphone, for example, various smart bands or smart jewelry for monitoring physical signs.

In embodiments of this application, a communication apparatus configured to implement a function of the network device may be the network device, may be a network device that has some functions of a base station, or may be an apparatus that can support the network device in implementing the function, for example, a chip system, where the apparatus may be installed in the network device.

During actual network deployment, it is impossible for a terrestrial network to cover all areas, especially an area with a small quantity of people, for example, desert, ocean, or the north and south poles. A non-terrestrial network NTN covers a wide area, is easier to provide coverage in the area with the small quantity of people, and is suitable for deployment in the area with the small quantity of people. Embodiments of this application are applicable to non-terrestrial network NTN communication. The NTN is a network or a network segment that uses a radio frequency on a satellite (a UAS platform). The following describes in detail the technical solutions in this application by using a satellite communication system as an example.

In the satellite communication system, a network device may include a satellite.

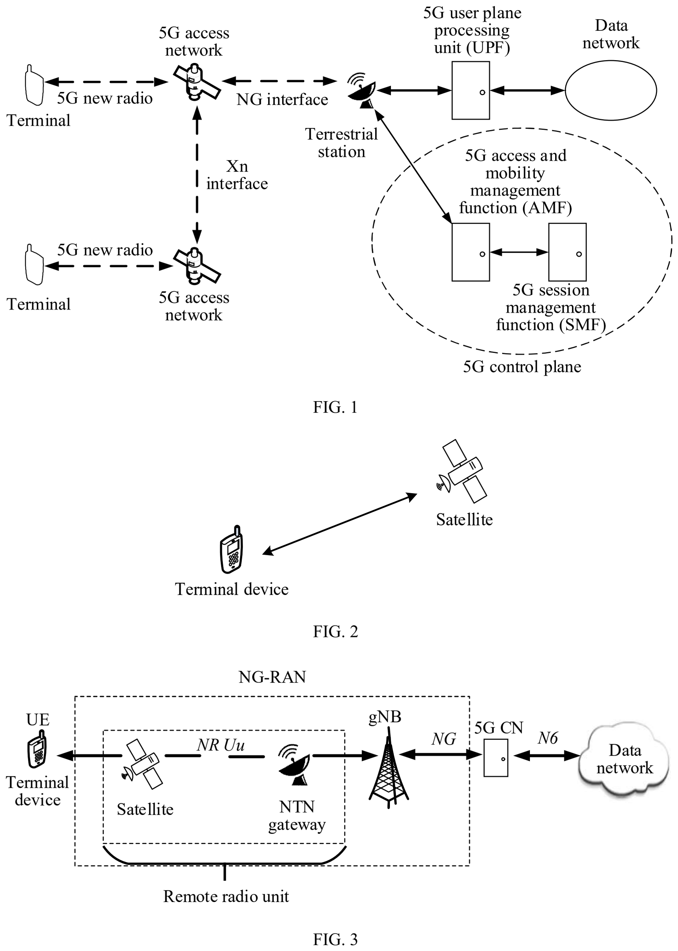

FIG. 1 is a diagram of a network architecture applicable to an embodiment of this application. A terrestrial mobile terminal UE accesses a network through 5G new radio. A 5G access network device is deployed on a satellite, and is connected to a terrestrial core network through a radio link. In addition, there is a radio link between satellites, to implement signaling exchange and user data transmission between access network devices. Network elements in FIG. 1 and interfaces of the network elements are described as follows.

Terminal device: is a mobile device that supports 5G new radio, for example, a mobile phone and a pad. The terminal device may access a satellite network through an air interface and initiate a service such as a call or internet access.

5G access network device: mainly provides a radio access service, schedules a radio resource for an access terminal, provides a reliable wireless transmission protocol and data encryption protocol, and the like, and is, for example, a base station.

5G core network: provides services such as user access control, mobility management, session management, user security authentication, and charging. The 5G core network includes a plurality of functional units, and the functional units may be classified into control-plane functional entities and data-plane functional entities. An access and mobility management unit (AMF) is responsible for user access management, security authentication, and mobility management. A user plane unit (UPF) is responsible for managing user plane data transmission, traffic statistics collection, and the like.

Terrestrial station: is responsible for forwarding signaling and service data between a satellite access network device and a 5G core network.

5G new radio: is a radio link between a terminal and an access network device.

Xn interface: is an interface between a 5G access network device and an access network device, and is mainly for signaling exchange such as handover.

NG interface: is an interface between an 5G access network device and a 5G core network, and is mainly for exchanging signaling such as NAS signaling of the core network and service data of a user.

FIG. 2 is a diagram of an architecture of a communication system applicable to an embodiment of this application. As shown in FIG. 2, the communication system may include at least one network device, for example, the satellite device shown in FIG. 1. The communication system may further include at least one terminal device, for example, the terminal device shown in FIG. 1. The network device may communicate with the terminal device through a radio link.

It should be understood that the network device in a wireless communication system may be any device that has a wireless transceiver function. The device includes but is not limited to a base station controller (Base Station Controller, BSC), a base transceiver station (Base Transceiver Station, BTS), and the like; may be one antenna panel or a group of antenna panels (including a plurality of antenna panels) of a base station in a 5G system, or the like; or may be a satellite or the like.

It should be understood that FIG. 2 shows only one network device and one terminal device. In an example, the communication system is not limited, and may include more terminal devices. For example, in a satellite communication network, the satellite may cover a plurality of terminal devices for communication. Each terminal device is not limited to communicating with one network device either. For example, after the satellite moves, the terminal device may reselect a satellite for access communication.

It may be understood that FIG. 2 is merely an example, and does not constitute any limitation on the protection scope of this application. A positioning method for an NTN provided in embodiments of this application may further relate to a network element or a device that is not shown in FIG. 2. Certainly, the positioning method for an NTN provided in embodiments of this application may alternatively include only some network elements shown in FIG. 2.

FIG. 3 is a diagram of an architecture of a communication system applicable to an embodiment of this application. A name of the architecture shown in FIG. 3 is RAN architecture with transparent satellite (RAN architecture with transparent satellite). As shown in FIG. 3, in a transparent (transparent) transmission scenario, a satellite is used to implement frequency conversion and radio frequency amplification, and is equivalent to an analog radio frequency repeater. Therefore, the satellite replicates an NR-Uu radio interface signal from a feeder link (feeder link) (between an NTN gateway and the satellite) to a service link (service link) (between the satellite and UE), and vice versa. A satellite radio interface SRI (Satellite Radio Interface) on the feeder link transmits an NR-Uu interface signal, that is, the satellite does not terminate the NR-Uu interface signal, but replicates the signal. The NTN gateway supports all necessary functions for forwarding the NR-Uu interface signal. Different transmission satellites can be connected to a same terrestrial gNB.

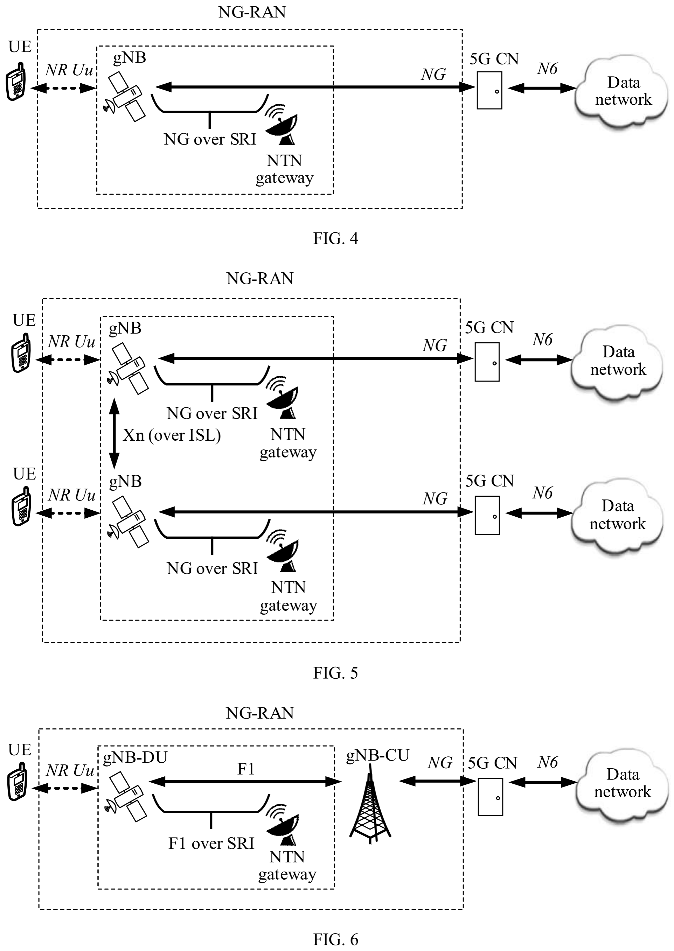

FIG. 4 is a diagram of another architecture of a communication system applicable to an embodiment of this application. A name of the architecture shown in FIG. 4 is regenerative satellite without inter-satellite link (Regenerative satellite without ISL (inter-satellite link, inter-satellite link)). In this architecture, a satellite serves as a base station to regenerate a signal received from the ground. To be specific, an NR-Uu radio interface signal is transmitted on a service link between UE and the satellite, and a satellite radio interface (SRI) signal is transmitted on a feeder link between an NTN gateway and the satellite. An SRI is a transmission link between the NTN gateway and the satellite. An NG interface signal is transmitted to the NTN gateway through the SRI, and then forwarded by the NTN gateway to a terrestrial core network device. A process of transmitting an NG interface signal from the terrestrial core network device to the satellite base station is similar, and details are not described herein again.

FIG. 5 is a diagram of another architecture of a communication system applicable to an embodiment of this application. A name of the architecture shown in FIG. 4 is regenerative satellite with inter-satellite link (Regenerative satellite with ISL). In this scenario, a satellite also serves as a base station. A difference from the previous scenario is that an ISL exists in this scenario. The ISL is a transmission link between satellites. As shown in the foregoing figure, UE served by a base station on a satellite can access a 5G core network through an ISL. Base stations on different satellites can be connected to a same terrestrial 5G core network.

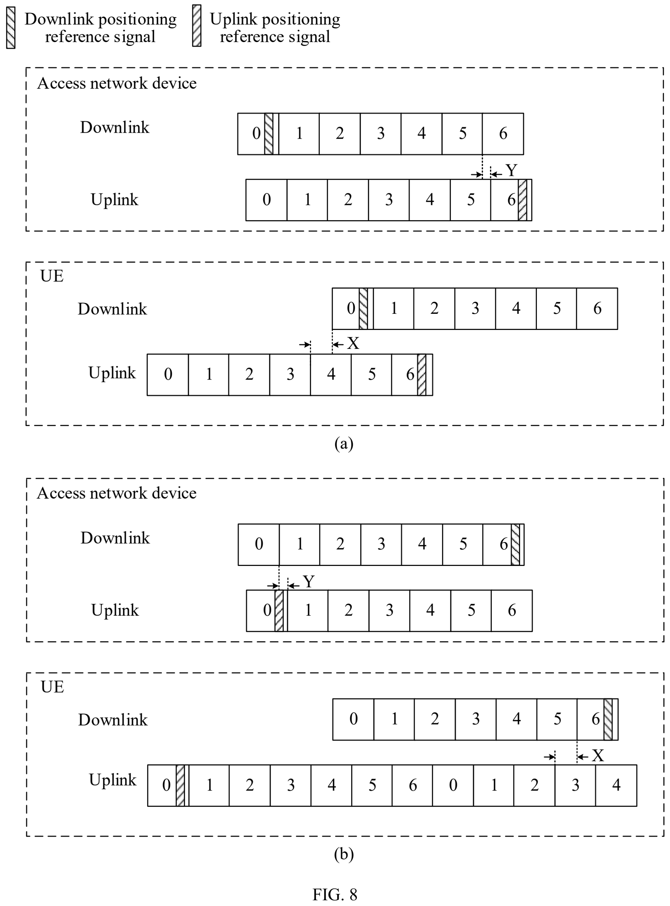

FIG. 6 is a diagram of another architecture of a communication system applicable to an embodiment of this application. A name of the architecture shown in FIG. 4 is NG-RAN with a regenerative satellite based on gNB-DU (NG-RAN with a regenerative satellite based on gNB-DU). In this scenario, a CU and a DU of a base station are separated. A satellite serves as the DU of the base station on a satellite. The satellite regenerates a signal received from the ground. To be specific, an NR-Uu radio interface signal is transmitted on a service link between UE and the satellite, and a satellite radio interface (SRI) signal is transmitted on a feeder link between an NTN gateway and the satellite. The satellite radio interface is a transmission link, and can transmit a logical interface F1 signal in compliance with the 3GPP standard. An F1 protocol signal is transmitted over the satellite radio interface. The satellite can provide an inter-satellite link ISL between satellites. The NTN gateway is a node at a transport network layer and supports all necessary transport protocols. DUs on different satellites can be connected to a same terrestrial CU.

It should be noted that the foregoing RAN architecture is merely an example for description, and may be further used in another NTN architecture, or in 4G, 5G, or a future wireless network architecture. This is not limited in embodiments of this application.

When a terminal registers with a core network, the core network needs to determine whether the terminal should camp on the core network, that is, select a proper core network for the terminal. The core network needs to verify location information of the terminal, that is, the network verifies, based on a location of the terminal device determined by the network and a location reported by the terminal, whether the terminal is located in a specific range, thereby verifying accuracy of the location information of the terminal.

In an existing NR standard protocol, an NTN can verify the location of the terminal by using a positioning service procedure in a TN.

For ease of understanding embodiments of this application, terms in embodiments of this application are described in detail.

### 1. Positioning technology for a TN

A target terminal (Target UE) can be positioned by using the positioning technology, so that a positioning initiator initiating a positioning service obtains a location of the target terminal. The target UE receives or sends a positioning reference signal. The target UE is positioned by using a positioning method supported in NR and LTE.

In this application, the positioning initiator includes an LCS (LoCation Services, positioning server), UE, or an AMF (access and mobility management function, access and mobility management function). For example, the LCS requests a serving AMF of the target UE to position the target UE. The serving AMF decides to position the target UE, for example, the UE needs to be positioned due to an emergency call. The UE requests the positioning service from the serving AMF of the UE, for example, for positioning or transmission of assistance information.

In this application, the positioning method includes but is not limited to multi-round trip time (Multi-Round Trip Time, Multi-RTT) positioning, downlink time difference of arrival (Downlink Time Difference Of Arrival, DL-TDOA) positioning, uplink time difference of arrival (Uplink Time Difference of Arrival, UL-TDOA) positioning, downlink angle-of-departure (Downlink Angle-of-Departure, DL-AoD) positioning, uplink angle of arrival (Uplink Angle of Arrival, UL-AoA) positioning, NR enhanced cell ID (NR Enhanced Cell ID, NR E CID) positioning, motion sensor (Motion sensor) positioning, terrestrial beacon system (Terrestrial Beacon System, TBS) positioning, Bluetooth (Bluetooth) positioning, wireless local area network (Wireless Local Area Network, WLAN) positioning, barometric pressure sensor (Barometric pressure sensor) positioning, enhanced cell ID positioning, observed time difference of arrival (Observed Time Difference Of Arrival, OTDOA) positioning, network-assisted global navigation satellite system (global navigation satellite system, GNSS) positioning, and the like.

### 2. Transmission point (Transmission Point, TP)

The transmission point is a group of geographically co-located transmit antennas (for example, an antenna array (having one or more antenna elements)) for a cell, a part of a cell, or a DL-PRS-only TP. The transmission point may include a base station (ng-eNB or gNB) antenna, a remote radio head, a remote antenna of a base station, an antenna of the DL-PRS-only TP, and the like. One cell may include one or more transmission points. For a homogeneous deployment, each transmission point may correspond to one cell.

### 3. Reception point (Reception Point, RP)

The reception point is a group of geographically co-located receive antennas (for example, an antenna array (having one or more antenna elements)) for a cell, a part of a cell, or a UL-SRS-only RP. The reception point may include a base station (ng-eNB or gNB) antenna, a remote radio head, a remote antenna of a base station, an antenna of the UL-SRS-only RP, and the like. One cell may include one or more reception points. For a homogeneous deployment, each reception point may correspond to one cell.

Transmission and reception point (transmission-reception point, TRP): is a group of geographically co-located antennas (for example, an antenna array (having one or more antenna elements)), and supports TP and/or RP functions.

In an NTN scenario, the TRP may be deployed on a satellite, an uncrewed aerial vehicle, an airship, a high-altitude platform, or the like, or may be deployed on a base station, an NTN gateway, a terrestrial station, or the like. This is not limited in embodiments of this application.

The following describes the positioning service procedure in the TN in detail.

In the positioning technology for the TN, a multi-round trip time (Multi-round trip time, Multi-RTT) positioning technology and a downlink time difference of arrival (DL-time difference of arrival, DL-TDOA) positioning technology are used as examples.

The following briefly describes a principle of multi-RTT positioning.

In multi-RTT positioning, a plurality of TRPs (at least three TRPs are needed) and UE send reference signals to each other for measurement. Then, a location management function (location management function, LMF) calculates Rx-Tx round-trip time RTT between the UE and the plurality of TRPs, and calculates an actual distance R1/R2/R3 between the UE and each TRP based on a transmission speed of an electromagnetic wave and the round-trip time RTT. In this case, the UE is definitely at an intersection point of three spheres using access network devices to which the TRPs belong as centers and R1, R2, and R3 as radii. Because locations of the access network devices to which the TRPs belong are known, location solving may be directly performed by using a three-dimensional equation set.

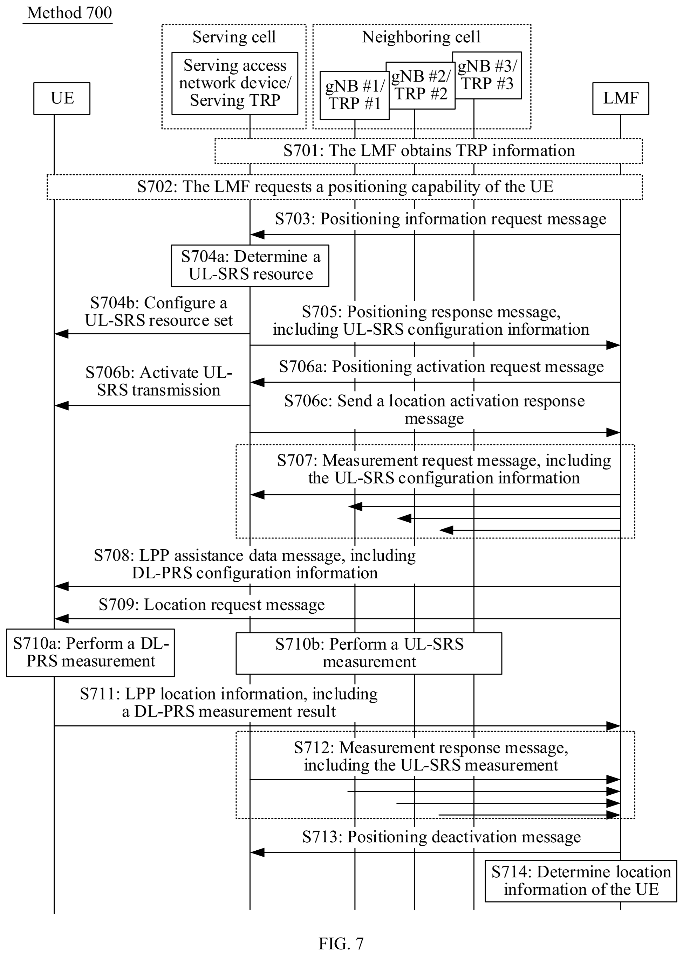

FIG. 7 is a diagram of a positioning procedure. The diagram of the positioning procedure is applicable to the multi-RTT positioning technology. The positioning procedure includes steps S701 to S713. Specific steps are as follows.

Step S701: The positioning center LMF (location management function, Location Management Function) obtains TRP information required for multi-RTT positioning, for example, time sequence information of a TRP served by an access network device, a TRP ID, and positioning reference signal configuration information.

Step S702: The LMF requests a positioning capability of the UE.

Step S703: The LMF sends an NR positioning protocol A (NR Positioning Protocol A, NRPPa) positioning information request message to the serving access network device, to request UL information of the UE.

Step S704 includes S704a and S704b. S704a: The serving access network device determines a resource available for a UL-SRS. S704b: The serving access network device configures a UL-SRS resource set for the UE.

Step S705: The serving access network device provides UL-SRS configuration information for the LMF by using an NRPa positioning information response message. Whether an SRS configuration is earlier than a DL-PRS configuration depends on an implementation. This is not limited in this embodiment of this application.

Step S706 includes S706a, S706b, and S706c. S706a: In a case of a semi-static or aperiodic SRS, the LMF may request to activate UE SRS transmission by sending an NRPPa positioning activation request message to the serving access network device of the UE. S706b: The serving access network device activates UL-SRS transmission. S706c: The serving access network device sends an NRPPa location activation response message. The UE starts UL-SRS transmission based on a time domain behavior of a UL-SRS resource configuration.

Step S707: The LMF provides a UL-SRS configuration for the serving access network device by using an NRRPa measurement request message, where the message includes all information required for causing a gNB/TRP to perform a UL measurement.

Step S708: The LMF sends an LTE positioning protocol (LTE Positioning Protocol, LPP) assistance data provision message to the UE, where the message includes any assistance data required by the UE to perform a necessary DL-PRS measurement.

Step S709: The LMF sends an LPP location information request message to request a measurement.

Step S710: S710a: The UE performs DL-PRS measurements of all access network devices provided in the assistance data in S708. S710b: Each access network device configured in S707 measures the UE SRS transmission from the UE.

Step S711: A target device reports a DL-PRS measurement for multi-RTT to the LMF by using an LPP location information message.

Step S712: Each access network device reports a UE SRS measurement to the LMF by using an NRPa measurement response message.

Step S713: The LMF sends an NRPPa positioning deactivation message to the serving access network device.

Step S714: The LMF determines location information of the UE.

In step S711, a measurement result reported by the terminal device is a receiving-sending time difference (Rx-Tx time difference), which is defined as TUE-RX - TUE-TX in a standard protocol. TUE-RX is timing of a downlink subframe #i received by the UE from a transmission point (TP), and is defined by a 1^{st} detection path in time. TUE-TX is sending timing of the UE for an uplink subframe #j closest to the subframe #i received from the TP in time. Based on an indication of a higher layer, a plurality of DL PRSs or CSI-RSs for resource tracking may be used to determine a start of a subframe of a first arrival path from the TP. For a frequency range 1, a reference point for a TUE-RX measurement should be an Rx antenna connector of the UE, and a reference point for a TUE-TX measurement should be a Tx antenna connector of the UE. For a frequency range 2, the reference point for the TUE-RX measurement should be an Rx antenna of the UE, and the reference point for the TUE-TX measurement should be a Tx antenna of the UE.

In step S712, a measurement result reported by the network device is a receiving-sending time difference (Rx-Tx time difference), which is defined as TgNB-RX - TgNB-TX in the standard protocol. TgNB-RX is a receiving time sequence of a transmission and reception point (TRP) for an uplink subframe #i including an SRS associated with the UE, and is defined by a 1^{st} detection path in time. TgNB-TX is sending timing of the TRP for a downlink subframe #j, and the subframe #j is closest to the subframe #i received from the UE in time. A plurality of SRS resources may be used to determine a start of a subframe including an SRS.

It should be noted that coverage of a TN cell is small, and is generally thousands of meters to dozens of kilometers, and a propagation delay difference of 0.5 ms (corresponding to 150 km) is sufficient to meet a coverage requirement of the TN cell. However, coverage of an NTN cell is wide, a cell diameter may be hundreds or thousands of kilometers, a propagation delay difference between a cell center and a cell edge may be several milliseconds, and a propagation delay difference between neighboring cells may be several milliseconds or even more than 10 milliseconds. An existing measurement result reporting mechanism cannot meet a requirement in an NTN scenario.

It should be noted that in this application, receiving timing or sending timing may be understood as a time sequence or start time of a subframe, or may be understood as end time of a subframe. This is not limited in this embodiment of this application. In the following embodiments, the start time of the subframe is used as an example for description.

FIG. 8 is a diagram of a frame structure for reporting the measurement results by the terminal device and the network device. (a) in FIG. 8 is a scenario 1. In the scenario 1, the access network device first sends a PRS. (b) in FIG. 8 is a scenario 2. In the scenario 2, the access network device first receives an SRS. The scenario 1 is used as an example.

According to an existing TN technology, it is assumed that the terminal receives the downlink positioning reference signal PRS in a downlink subframe #0, an uplink subframe closest to the downlink subframe #0 is an uplink subframe #4, the terminal device reports a timing difference X between the downlink subframe #0 and the uplink subframe #4 to the LMF, the access network device receives an uplink positioning reference signal SRS in an uplink subframe #6, a downlink subframe closest to the uplink subframe #6 is a downlink subframe #6, and the access network device reports a timing difference Y between the downlink subframe #6 and the downlink subframe #6 to the LMF.

It may be understood that in this application, the two timing differences are offsets between start locations of the uplink subframes and start locations of the downlink subframes.

As shown in (a) in FIG. 8, absolute values of the two timing differences (time differences between start boundaries of the subframes) are less than 0.5 ms. However, in the NTN scenario, an actual propagation delay may be several milliseconds or even dozens of milliseconds. According to the existing TN technology, the LMF cannot determine a location of the terminal based on the measurement result reported by the terminal.

A principle of (b) in FIG. 8 is the same, and details are not described again.

The following briefly describes a principle of DL-TDOA positioning.

In DL-TDOA positioning, a TRP sends a positioning reference signal (positioning reference signal, PRS) to UE. The UE performs a DL RSTD (reference signal time difference) measurement on a PRS delivered by each TRP, and reports DL RSTD measurement information to an LMF. The LMF calculates a specific location of the UE based on a known location of the TRP and an RSTD measurement result.

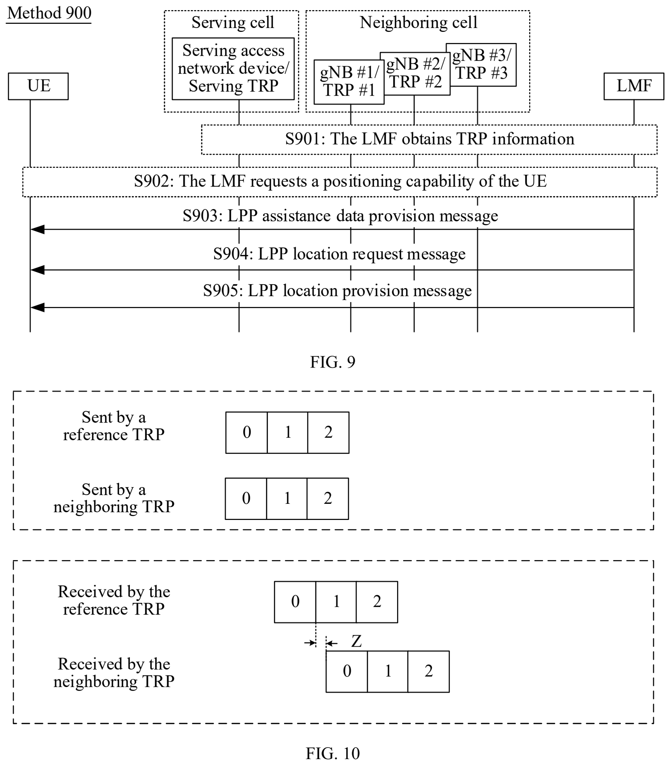

FIG. 9 is a diagram of another positioning procedure. The diagram of the positioning procedure is applicable to the DL-TDOA positioning technology. The positioning procedure includes steps S901 to S905. Specific steps are as follows.

Step S901: The LMF obtains TRP information required for DL-TDOA positioning, for example, time sequence information of a TRP served by a base station, a TRP ID, and positioning reference signal configuration information.

Step S902: The LMF requests a positioning capability of the UE.

Step S903: The LMF sends an LPP assistance data provision message to the UE, where the message includes any assistance data required for a target device to perform a necessary DL-PRS measurement.

Step S904: The LMF sends an LPP location request message to request a DL-TDOA measurement.

Step S905: The UE performs the measurement, and sends an LPP location provision message.

In step S905, the terminal reports a DL RSTD in the LPP location provision message, where the downlink reference signal time difference (DL RSTD) is a downlink relative timing difference between a transmission point (TP) j and a reference TP i, and is defined as TSubframeRxj - TSubframeRxi. TSubframeRxj is start time of a subframe received by the UE from the TP j. TSubframeRxi is corresponding start time of a subframe received by the UE from the TP i, where the subframe is closest to the subframe received from the TP j in time. A plurality of downlink PRS resources may be used to determine a start of a subframe of a TP. For a frequency range 1, a reference point for the DL RSTD should be an antenna connector of the UE. For a frequency range 2, the reference point for the DL RSTD should be an antenna of the UE.

In a TN scenario, a reference TRP and a neighboring TRP are two TRPs, and the terminal measures a subframe boundary difference between the reference TRP and the neighboring TRP. In a single-satellite scenario, there is only one TRP, and the terminal is connected to a base station or a cell corresponding to the TRP. When the terminal receives a downlink positioning reference signal of the TRP, there is no other TRP for comparison, or the terminal compares a subframe boundary of the downlink positioning reference signal with time of the terminal. In this case, a subframe boundary difference is zero.

In addition, coverage of a TN cell is small, and is generally thousands of meters to dozens of kilometers, and a propagation delay difference of 0.5 ms (corresponding to 150 km) is sufficient to meet a coverage requirement of the TN cell. However, coverage of an NTN cell is wide, a propagation delay difference between a cell center and a cell edge may be several milliseconds, and a propagation delay difference between neighboring cells may be several milliseconds or even more than 10 milliseconds. An existing delay difference reporting mechanism cannot meet a requirement in an NTN scenario. Note: The second disadvantage is for a multi-satellite scenario, or understood as a multi-TRP scenario.

FIG. 10 is a diagram of another frame structure for reporting a measurement result by the terminal device.

According to the conventional technology, the UE reports a boundary difference Z between a subframe that is of the neighboring TRP and that includes a downlink positioning reference signal and a closest subframe of the reference TRP, where an absolute value of the time difference is less than 0.5 millisecond. However, an actual propagation delay difference may be greater than 1 ms.

In conclusion, for the NTN scenario, an existing measurement solution for the terminal device in the TN scenario cannot meet a requirement in the NTN scenario, and a measurement solution is urgently needed to implement positioning or location verification of the terminal device in the NTN scenario.

In view of this, an embodiment of this application provides a positioning method for an NTN, in which a terminal is positioned or location information of a terminal is verified in an NTN by using a positioning service procedure in a TN, to meet a positioning requirement in an NTN scenario.

The following describes the solution of this application in detail.

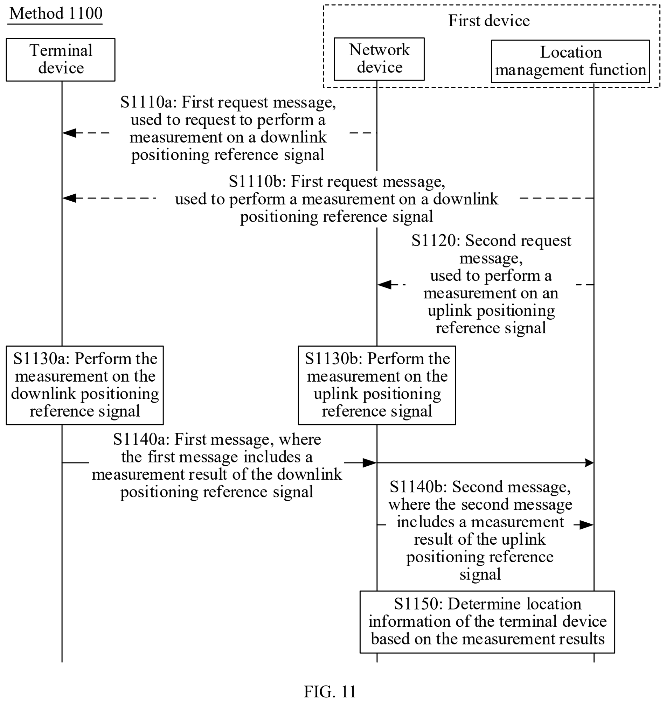

FIG. 11 is a schematic flowchart of a positioning method for an NTN according to this application. The method 1100 is applicable to a multi-RTT positioning technology.

In this embodiment, an example in which a network device and a terminal device are used as execution bodies of interaction illustration is used to illustrate the method. However, the execution bodies of the interaction illustration are not limited in this application. For example, the network device in FIG. 11 may alternatively be a chip, a chip system, or a processor that supports a method that can be implemented by the network device, or may be a logical module or software that can implement all or some functions of an access network device. The terminal device in FIG. 11 may alternatively be a chip, a chip system, or a processor that supports a method that can be implemented by the terminal device, or may be a logical module or software that can implement all or some functions of the terminal device.

Step S1110: The terminal device receives a first request message.

In this application, the first request message is used to request the terminal device to perform a measurement on a downlink positioning reference signal.

Specifically, the terminal device receives the first request message from a first device.

In this application, the first device may be a location management function, or may be the network device, for example, may be the access network device, or may be a TRP.

In a possible implementation, the terminal device receives the first request message from the network device, and correspondingly, the network device sends the first request message to the terminal device, as shown in S1110a.

In another possible implementation, the terminal device receives the first request message from the location management function, and correspondingly, the location management function sends the first request message to the terminal device, as shown in S1110b.

For example, the first request message may be an LPP location request message.

For example, the location management function may be an LMF network element.

For example, the downlink positioning reference signal may be a PRS.

Step S1120: The network device receives a second request message.

In this application, the second request message is used to request the network device to perform a measurement on an uplink positioning reference signal.

Specifically, the network device receives the second request message from the location management function.

Step S1130: The terminal device and the network device each perform the measurement on the positioning reference signal.

The terminal device performs the measurement on the downlink positioning reference signal based on the first request message, as shown in S1130a.

The network device performs the measurement on the uplink positioning reference signal based on the second request message, as shown in S1130b.

For example, the uplink positioning reference signal may be an SRS.

The terminal device performs the measurement based on positioning reference signal configuration information provided by the network device or the location management function.

Step S1140: The terminal device and the network device each send a measurement result.

In a possible implementation, the terminal device sends a first message to the first device, where the first message carries a result of measuring the downlink positioning reference signal by the terminal device, as shown in S1140a.

Correspondingly, the first device receives the first message sent by the terminal device, where the first message carries the result of measuring the downlink positioning reference signal by the terminal device.

It should be understood that the first device may be the network device, or may be the location management function.

It should be understood that the network device may have a capability of the location management function.

In a possible implementation, the network device sends a second message to the location management function, where the second message carries a result of measuring the uplink positioning reference signal by the network device, as shown in S1140b.

In other words, when the first device is the location management function, the first device needs to receive the second message from the network device, and the second message carries the result of measuring the uplink positioning reference signal by the network device.

In other words, when the first device is the network device, the access network device determines location information of the terminal based on the first message sent by the terminal device and the measurement result of the uplink positioning reference signal.

Step S1150: The first device determines the location information of the terminal device based on the measurement results.

In a possible implementation, the first device is the network device, and the network device determines the location information of the terminal device based on the first message reported by the terminal device and the measurement result of the uplink positioning reference signal.

In a possible implementation, the first device is the location management function, and the location management function determines the location information of the terminal device based on the first message reported by the terminal device and the second message reported by the network device.

An execution sequence of the foregoing steps is not limited. For example, there is no sequence requirement for step S1110 and step S1120, and there is no sequence requirement for step S1130a and step S1130b.

In this application, the measurement results of the positioning reference signals reported by the terminal device and the network device (the foregoing step S1140) may meet a requirement in an NTN scenario. The following describes in detail the measurement result reported in this application.

The following provides examples of the measurement result applicable to the foregoing method 1100.

### Example 1

In S1140a, the terminal device sends the first message to the first device.

In a possible implementation, the first message includes an offset between a start location of a first subframe and a start location of a second subframe. The first subframe is a downlink subframe in which the downlink positioning reference signal is located. The second subframe is an uplink subframe that has a same frame number and a same subframe number as the first subframe and that is closest to the first subframe.

The offset between the start location of the first subframe and the start location of the second subframe may be an offset between receiving time of the first subframe (that is, the subframe in which the downlink positioning reference signal is located) and sending time of the second subframe (that is, the uplink subframe that has the same frame number and the same subframe number as the first subframe and that is closest to the first subframe).

The start location may be understood as a location corresponding to time at which the subframe starts to be received or sent, or in other words, a location corresponding to start time for receiving or sending the subframe. In this application, the start location of the subframe can be understood with reference to the descriptions. Details are not described below again.

The offset between the start location of the first subframe and the start location of the second subframe may be understood as a time difference between start time of the first subframe and start time of the second subframe, or in other words, a difference between a start moment of the first subframe and a start moment of the second subframe. In this application, the offset can be understood with reference to the descriptions. Details are not described below again.

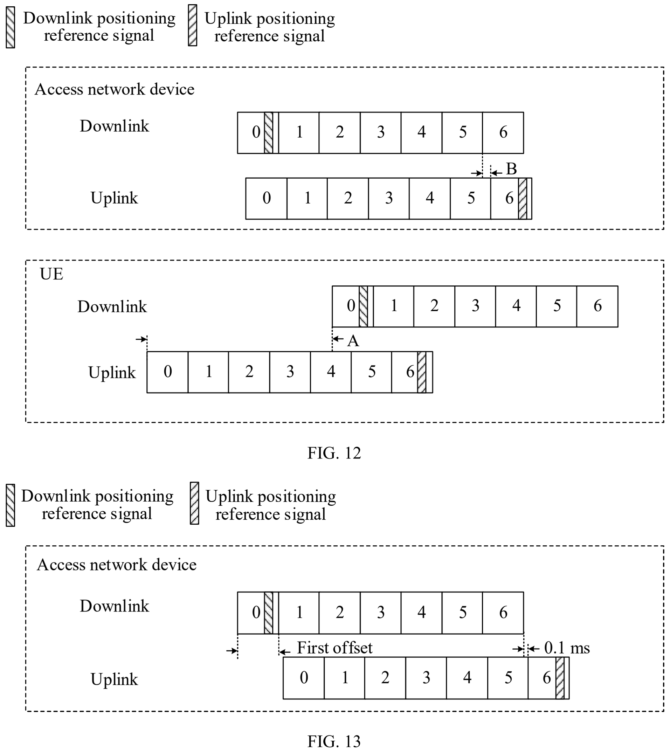

FIG. 12 is a diagram of a frame structure that is applicable to an embodiment of this application that is used to report the measurement results of the terminal device and the network device.

As shown in FIG. 12, the first subframe is a downlink subframe #0 in which the downlink positioning reference signal is located, the second subframe is an uplink subframe #0 that has a same frame number and a same subframe number as the first subframe and that is closest to the first subframe, and the offset between the start location of the first subframe and the start location of the second subframe is A shown in the figure.

It should be understood that the offset between the start location of the first subframe and the start location of the second subframe may also be understood as a timing advance of the terminal device.

In a possible implementation, the offset A may be represented by a frame, a subframe, or a subframe difference.

For example, as shown in FIG. 12, if the offset A between the downlink subframe #0 in which a downlink positioning reference signal of UE is located and the uplink subframe #0 is 4.4 ms, the frame is 0 ms, the subframe is 4 ms, and the subframe difference is 0.4 ms.

For example, if a difference between start time of the downlink subframe #0 in which the downlink positioning reference signal of the UE is located and start time of the uplink subframe #0 is 4.9 ms, the frame is 0 ms, the subframe is 4 ms, and the subframe difference is 0.9 ms; or the frame is 0 ms, the subframe is 5 ms, and the subframe difference is -0.1 ms. When a value of the frame is zero, the frame may be omitted. For example, when a field corresponding to the frame is default, a network considers that the value corresponding to the frame is zero.

In a possible implementation, if a TRP is deployed on a satellite, the UE reports a delay between the UE and the satellite; or if a TRP is deployed on a base station or a terrestrial station, the terminal reports a complete timing advance, where the complete timing advance includes a delay from the UE to the satellite and a timing advance value from the satellite to the base station or the terrestrial station.

In a possible implementation, if a TRP is deployed on a base station or a terrestrial station, the terminal may report a delay from the UE to the satellite.

In S1140b, the network device sends the second message to the first device.

In this application, the second message includes an offset between a start location of a third subframe and a start location of a fourth subframe. The third subframe is an uplink subframe in which the uplink positioning reference signal is located. The fourth subframe is a downlink subframe that has a same frame number and a same subframe number as the third subframe and that is closest to the third subframe.

The offset between the start location of the third subframe and the start location of the fourth subframe may be an offset between receiving time of the third subframe (that is, the subframe in which the uplink positioning reference signal is located) and sending time of the fourth subframe (that is, the downlink subframe that has the same frame number and the same subframe number as the third subframe and that is closest to the third subframe).

As shown in FIG. 12, the third subframe is an uplink subframe #6 in which the uplink positioning reference signal is located, the fourth subframe is a downlink subframe #6 that has a same frame number and a same subframe number as the third subframe and that is closest to the third subframe, and the offset between the start location of the third subframe and the start location of the fourth subframe is B shown in the figure.

The offset B may be represented by a frame, a subframe, or a subframe difference, and is represented in a same manner as that of the offset A. Details are not described herein again.

In a possible implementation, in the NTN scenario, there is a case in which downlink frame timing and uplink frame timing of the access network device are not aligned, and a difference between the downlink frame timing and the uplink frame timing may be represented by a first offset.

A unit of the first offset may be a quantity of slots at a given subcarrier spacing.

For example, for a subcarrier spacing of 15 kHz, the unit of the first offset is one slot, that is, one slot, that is, 1 ms.

The offset, reported by the base station/TRP, between the subframe including the corresponding uplink positioning reference signal and the closest downlink subframe with the same frame number and the same subframe number may alternatively be represented by the first offset and a subframe difference.

In a possible implementation, downlink frame timing and uplink frame timing are not aligned. This embodiment of this application provides an example of a measurement result reporting mechanism in this case.

FIG. 13 is a diagram of a frame structure for reporting the measurement result when the downlink frame timing and the uplink frame timing are not aligned. As shown in FIG. 13, the network device receives the uplink positioning reference signal in an uplink subframe #6, a closest downlink subframe with a same frame number and a same subframe number is a downlink subframe #6, and it is assumed that an offset between the uplink subframe #6 and the downlink subframe #6 is 1.1 ms. The downlink frame timing and the uplink frame timing of the network device are not aligned. If the first offset in the figure is 1 ms, the offset of 1.1 ms between the uplink subframe #6 and the downlink subframe #6 may be represented by the first offset of 1 ms and the subframe difference of 0.1 ms. The subframe difference of 0.1 ms may be calculated through 1.1 ms minus 1 ms, or 0.1 ms may be calculated by using a remainder of 1.1 ms.

It should be noted that the subframe difference may represent a positive number, or may represent a negative number. In a possible scenario, it is assumed that the offset, reported by the network device, between the subframe including the corresponding uplink positioning reference signal and the closest downlink subframe with the same frame number and the same subframe number is 0.9 ms, and the first offset is 1 ms. In this case, the subframe difference may be -0.1 ms.

In a possible implementation, the first offset and the subframe difference may be reported to the first device by using a same message, or may be reported to the first device by using different messages. This is not limited in this embodiment of this application.

FIG. 12 and FIG. 13 are merely examples for description, and do not constitute any limitation on this embodiment of this application.

In S1140a and S1140b, the first message sent by the terminal device and the second message sent by the network device may further include timestamp information.

The timestamp information includes any one of the following: a system frame number and a subframe number that are of a reference network device and that correspond to start time of a subframe in which the downlink positioning reference signal is received; a system frame number and a subframe number that are of the reference network device and that correspond to a moment at which the downlink positioning reference signal is received; and a system frame number and a subframe number that are of the reference network device and that correspond to a subframe in which the uplink positioning reference signal is sent.

In a possible implementation, the timestamp information may be information about a system frame number and a subframe number of a subframe in which the downlink positioning reference signal PRS measured by the terminal device is located, information about a system frame number and a slot number of a slot in which the downlink positioning reference signal PRS measured by the terminal device is located, or information about a system frame number, a subframe number, and a slot number of a slot in which the downlink positioning reference signal PRS measured by the terminal device is located.

In a possible implementation, the timestamp information may be information about a system frame number and a subframe number when the terminal device performs the measurement on the downlink positioning reference signal, information about a system frame number and a slot number when the terminal device performs the measurement on the downlink positioning reference signal, or information about a system frame number, a subframe number, and a slot number when the terminal device performs the measurement on the downlink positioning reference signal.

In a possible implementation, the timestamp information may be information about a system frame number and a subframe number in which the terminal device sends the uplink positioning reference signal, information about a system frame number and a slot number in which the terminal device sends the uplink positioning reference signal, or information about a system frame number, a subframe number, and a slot number in which the terminal device sends the uplink positioning reference signal.

It may be understood that the timestamp information may alternatively be one or a combination of the foregoing three cases.

After receiving the timestamp information, the first device may more quickly determine a location of a TRP corresponding to the system frame number and the subframe number, or may distinguish the measurement result reported by the terminal.

According to the foregoing technical solution, in the NTN scenario, after performing the measurement on the downlink positioning reference signal, the terminal device reports the offset between the start location of the subframe in which the downlink positioning reference signal is located and the start location of the uplink subframe that has the same frame number and the same subframe number as the subframe and that is closest to the subframe, and the first device determines a location of the terminal device with reference to the offset, obtained by measuring the uplink positioning reference signal, between the start location of the subframe in which the uplink positioning reference signal is located and the start location of the downlink subframe that has the same frame number and the same subframe number as the subframe and that is closest to the subframe. Therefore, accuracy of the location of the terminal device is improved.

Example 2

In S1140a, the terminal device sends the first message to the first device.

In a possible implementation, the first message includes an offset between a start location of a first subframe and a start location of a second subframe. The first subframe is a downlink subframe in which the downlink positioning reference signal is located. The second subframe is an uplink subframe including the uplink positioning reference signal sent by the terminal device.

The offset between the start location of the first subframe and the start location of the second subframe may be an offset between receiving time of the first subframe (that is, the downlink subframe in which the downlink positioning reference signal is located) and sending time of the second subframe (that is, the uplink subframe in which the uplink positioning reference signal is located).

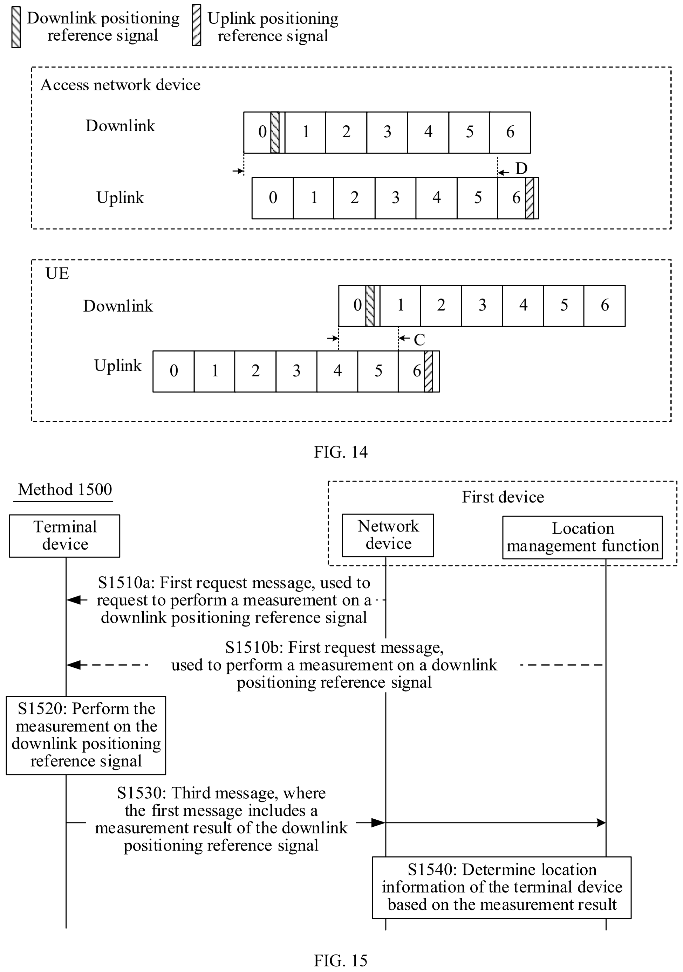

FIG. 14 is a diagram of a frame structure that is applicable to an embodiment of this application and that is used to report the measurement results of the terminal device and the network device.

As shown in FIG. 14, the first subframe is a downlink subframe #0 in which the downlink positioning reference signal is located, the second subframe is an uplink subframe #6 including the uplink positioning reference signal sent by the terminal device, and the offset between the start location of the first subframe and the start location of the second subframe is C shown in the figure.

It should be understood that the offset between the start location of the first subframe and the start location of the second subframe may also be understood as a timing advance of the terminal device.

In a possible implementation, the offset C may be represented by a frame, a subframe, or a subframe difference, and is represented in a same manner as that of the offset A. Details are not described herein again.

In S1140b, the network device sends the second message to the first device.

In this application, the second message includes an offset between a start location of a third subframe and a start location of a fourth subframe. The third subframe is an uplink subframe in which the uplink positioning reference signal is located. The fourth subframe is a downlink subframe including the downlink positioning reference signal sent by the network device.

The offset between the start location of the third subframe and the start location of the fourth subframe may be an offset between receiving time of the third subframe (that is, the uplink subframe in which the uplink positioning reference signal is located) and sending time of the fourth subframe (that is, the downlink subframe in which the downlink positioning reference signal is located).

As shown in FIG. 14, the third subframe is an uplink subframe #6 in which the uplink positioning reference signal is located, the fourth subframe is a downlink subframe #0 including the downlink positioning reference signal sent by the network device, and the offset between the start location of the third subframe and the start location of the fourth subframe is D shown in the figure.

The offset D may be represented by a frame, a subframe, or a subframe difference, and is represented in a same manner as that of the offset A. Details are not described herein again.

FIG. 14 is merely an example for description, and does not constitute any limitation on this embodiment of this application.

In S1140a and S1140b, the first message sent by the terminal device and the second message sent by the network device may further include timestamp information.

For specific content of the timestamp information, refer to the detailed descriptions in the method in FIG. 12. Details are not described again.

According to the foregoing technical solution, in the NTN scenario, after performing the measurement on the downlink positioning reference signal, the terminal device reports the offset between the start location of the subframe in which the downlink positioning reference signal is located and the start location of the uplink subframe in which the sent uplink positioning reference signal is located, and after performing the measurement on the uplink positioning reference signal, the network device reports the offset between the start location of the subframe in which the uplink positioning reference signal is located and the start location of the downlink subframe in which the sent downlink positioning reference signal is located, so that the first device accurately determines a location of the terminal device. Therefore, accuracy of the location of the terminal device is improved.

FIG. 15 is a schematic flowchart of still another positioning method for an NTN according to this application. The method 1500 is applicable to a DL-TDOA positioning technology.

In this embodiment, an example in which a network device and a terminal device are used as execution bodies of interaction illustration is used to illustrate the method. However, the execution bodies of the interaction illustration are not limited in this application. For example, the network device in FIG. 15 may alternatively be a chip, a chip system, or a processor that supports a method that can be implemented by the network device, or may be a logical module or software that can implement all or some functions of an access network device. The terminal device in FIG. 15 may alternatively be a chip, a chip system, or a processor that supports a method that can be implemented by the terminal device, or may be a logical module or software that can implement all or some functions of the terminal device.

Step S1510: The terminal device receives a first request message.

In this application, the first request message is used to request the terminal device to perform a measurement on a downlink positioning reference signal.

Specifically, the terminal device receives the first request message from a first device.

In this application, the first device may be a location management function, or may be the network device.

In a possible implementation, the terminal device receives the first request message from the network device, and correspondingly, the network device sends the first request message to the terminal device, as shown in S1510a.

In another possible implementation, the terminal device receives the first request message from the location management function, and correspondingly, the location management function sends the first request message to the terminal device, as shown in S1510b.

For example, the first request message may be an LPP location request message.

For example, the location management function may be an LMF network element.

For example, the downlink positioning reference signal may be a PRS.

Step S1520: The terminal device performs the measurement on the downlink positioning reference signal.

The terminal device performs the measurement on the downlink positioning reference signal based on the first request message.

The terminal device performs the measurement based on positioning reference signal configuration information provided by the network device or the location management function.

The measurement is a DL RSTD measurement. A specific measurement method is not limited in this embodiment of this application.

Step S1530: The terminal device sends a measurement result to the first device.

In a possible implementation, the terminal device sends a third message to the network device or the location management function, where the third message carries the result of measuring the downlink positioning reference signal by the terminal device.

Correspondingly, the first device receives the third message sent by the terminal device, where the third message carries the measurement result of measuring the downlink positioning reference signal by the terminal device.

Step S1540: The first device determines location information of the terminal device based on the measurement result.

In a possible implementation, the first device determines the location information of the terminal device based on the third message reported by the terminal device.

In this application, the third message carries the measurement result of measuring the downlink positioning reference signal by the terminal device, and the measurement result of the positioning reference signal reported by the terminal device (the foregoing step S1530) may meet a requirement in an NTN scenario. The following describes in detail the measurement result reported in this application.

The following provides examples of the measurement result applicable to the foregoing method 1500.

### Example 1

In S1530, the terminal device sends the third message to the first device.

In a possible implementation, the third message includes a difference between a propagation delay of the downlink positioning reference signal and a propagation delay of a reference downlink positioning reference signal.

The reference downlink positioning reference signal is one of downlink positioning reference signals sent by the network device.

In a possible implementation, the terminal device determines the propagation delay difference of the downlink positioning reference signal based on absolute time at which the network device sends the downlink positioning reference signal and absolute time at which the terminal device receives the downlink positioning reference signal.

For example, the terminal device receives configuration information of the downlink positioning reference signal, and determines, based on the configuration information of the downlink positioning reference signal, absolute time of an interval at which the network device sends the downlink positioning reference signal.

For example, the terminal device may alternatively receiving time sequence information of the network device, and determine, based on the time sequence information and configuration information of the downlink positioning reference signal, the absolute time at which the network device sends the downlink positioning reference signal.

It should be understood that after receiving the downlink positioning reference signal, the terminal device may directly determine the absolute time at which the downlink positioning reference signal is received.

The following describes in detail two processes of determining the difference between the propagation delays.

The following is a specific process of a determining manner 1.

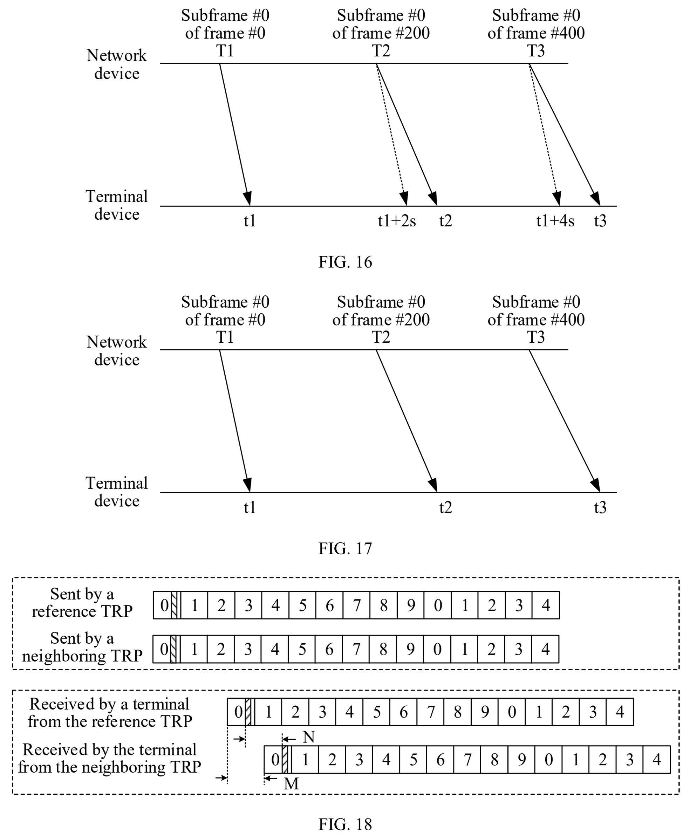

FIG. 16 is a diagram of sending time and receiving time of the downlink positioning reference signal applicable to an embodiment of this application.

Step a: The terminal device determines the sending time and the receiving time of the downlink positioning reference signal.

The terminal device determines the sending time of the downlink positioning reference signal based on the configuration information of the downlink positioning reference signal. As shown in FIG. 16, it is assumed that sending time of different access network devices or TRPs is a subframe #0 of a frame #0, a subframe #0 of a frame #200, and a subframe #0 of a frame #400 (generally, a larger time interval of downlink positioning reference signals indicates higher positioning precision, it is assumed in the figure that a time interval of sending the downlink positioning reference signals is 2s, time of one frame is 10 ms, and an interval of 200 frames is 2s, but an actual time interval may be greater than 2s). Absolute time corresponding to the subframe #0 of the frame #0 is T1, absolute time corresponding to the subframe #0 of the frame #200 is T2, and absolute time corresponding to the subframe #0 of the frame #400 is T3. It is assumed that the downlink positioning reference signal sent at the moment T1 (that is, a moment of the subframe #0 of the frame #0) in the figure is the reference downlink positioning reference signal.

After receiving the downlink positioning reference signals, the terminal may determine absolute time corresponding to receiving of the downlink positioning reference signals. It is assumed that the absolute time is t1, t2, and t3, and respectively corresponds to the sending time T1, T2, and T3.

Step b: The terminal device determines the difference between the propagation delay of the downlink positioning reference signal and the propagation delay of the reference downlink positioning reference signal.

In this embodiment, it is assumed that a time interval between the downlink positioning reference signals corresponding to the subframe #0 of the frame #0 and the subframe #0 of the frame #200 is 2s, and the terminal device may receive, at a moment t1+2s, the downlink positioning reference signal at a moment of the subframe #0 of the frame #200.

Because some network elements in the NTN scenario move, for example, a satellite moves, downlink positioning reference signals at different moments arrive at the terminal with different propagation delays. In the figure, if time at which the terminal device actually receives the downlink positioning reference signal corresponding to the subframe #0 of the frame #200 is t2, and a difference between propagation delays of the downlink positioning reference signals corresponding to the subframe #0 of the frame #200 and the subframe #0 of the frame #0 is t2-(t1+2s). Similarly, a difference between propagation delays of the downlink positioning reference signals corresponding to the subframe #0 of the frame #400 and the subframe #0 of the frame #0 is t3-(t1+4s).

A value of the difference between the propagation delays may be represented by a frame, a subframe, or a subframe difference, and is represented in a same manner as that of the offset A. Details are not described herein again.

FIG. 16 is merely an example for description, and does not constitute any limitation on this embodiment of this application.

The following is a specific process of a determining manner 2.

FIG. 17 is another diagram of sending time and receiving time of the downlink positioning reference signal applicable to an embodiment of this application.

Step a: The terminal device determines the sending time and the receiving time of the downlink positioning reference signal.

The terminal device may receive time sequence information of the network device. The terminal device determines, based on the time sequence information and configuration information of the downlink positioning reference signal, the absolute time at which the network device sends the downlink positioning reference signal.

The time sequence information of the network device is used by the terminal device to calculate the corresponding absolute time at which the network device sends the downlink positioning reference signal, for example, time information corresponding to start time of any subframe of any system frame. The time sequence information may be represented by absolute time corresponding to start time of a slot #0 of an SFN #0 of the network device. Alternatively, the time sequence information may be represented by absolute time corresponding to start time of a subframe #0 of an SFN #0 of the network device.

The network device may send the time sequence information to the terminal device by using the first request message, or may separately send the time sequence information.

As shown in FIG. 17, it is assumed that sending time of different access network devices or TRPs is a subframe #0 of a frame #0, a subframe #0 of a frame #200, and a subframe #0 of a frame #400 (generally, a larger time interval of downlink positioning reference signals indicates higher positioning precision, it is assumed in the figure that a time interval of sending the downlink positioning reference signals is 2s, time of one frame is 10 ms, and an interval of 200 frames is 2s, but an actual time interval may be greater than 2s). Absolute time corresponding to the subframe #0 of the frame #0 is T1, absolute time corresponding to the subframe #0 of the frame #200 is T2, and absolute time corresponding to the subframe #0 of the frame #400 is T3. It is assumed that the downlink positioning reference signal sent at the moment T1 (that is, a moment of the subframe #0 of the frame #0) in the figure is the reference downlink positioning reference signal.

After receiving the downlink positioning reference signals, the terminal may determine absolute time corresponding to receiving of the downlink positioning reference signals. It is assumed that the absolute time is t1, t2, and t3, and respectively corresponds to the sending time T1, T2, and T3.

Step b: The terminal device determines the difference between the propagation delay of the downlink positioning reference signal and the propagation delay of the reference downlink positioning reference signal.

The terminal device determines that propagation delays corresponding to downlink positioning reference signals at different moments are t1-T1, t2 T2, and t3-T3. If the downlink positioning reference signal sent at the moment T1 in the figure is the reference downlink positioning reference signal, differences between propagation delays reported by the terminal device are (t2-T2)-(t1-T1) and (t3-T3)-(t1-T1).

A value of the difference between the propagation delays may be represented by a frame, a subframe, or a subframe difference, and is represented in a same manner as that of the offset A. Details are not described herein again.

In another possible implementation, the terminal device may directly report propagation delays corresponding to downlink positioning reference signals at different moments, for example, t1-T1, t2-T2, and t3-T3 in FIG. 17.

FIG. 17 is merely an example for description, and does not constitute any limitation on this embodiment of this application.

The solution of this embodiment is also applicable to a handover scenario: The terminal device is handed over in a process in which the network device verifies the location of the terminal or the network device positions the location of the terminal device, that is, the terminal device is handed over from one network device to another network device, or the terminal device is handed over because of satellite handover or TRP handover.

A manner of determining the reference downlink positioning reference signal may be any one of the following manners, but is not limited to the following manners.

Manner 1: The terminal device sets, in the reported measurement result (that is, in the third message), a value of a propagation delay difference of a downlink positioning reference signal sent for the first time (or a specific time) to 0 or a propagation delay difference to default. In this case, the corresponding downlink positioning reference signal is the reference downlink positioning reference signal. Correspondingly, the LMF or the base station receives the measurement result reported by the terminal, and determines, based on the value of the propagation delay difference of the downlink positioning reference signal sent for the specific time being 0 or the propagation delay difference being default, that the downlink positioning reference signal is the reference downlink positioning reference signal.

Manner 2: The terminal device indicates the reference downlink positioning reference signal in the third message. Alternatively, the terminal device explicitly indicates, in the third message, that a result of measuring a downlink positioning reference signal at another moment is compared with a measurement result of measuring a downlink positioning reference signal at a specific moment. Alternatively, the terminal device explicitly indicates, in the third message, that a downlink positioning reference signal resource corresponding to a specific time is a reference downlink positioning reference signal resource.

Manner 3: The terminal device and the LMF or the network device agree to use a downlink positioning reference signal sent for the first time (or a specific time, for example, the last time) after the LMF or the network device triggers the terminal to perform a positioning measurement as the reference downlink positioning reference signal.

Manner 4: The terminal device receives an indication message sent by the LMF or the network device, where the indication message indicates the reference downlink positioning reference signal, for example, a specific downlink positioning reference signal resource is a reference downlink positioning reference signal resource, or a specific downlink positioning reference signal is the reference downlink positioning reference signal; or indicates that the measurement result reported by the terminal device should be compared with a measurement result of a specific downlink positioning reference signal.

Optionally, the third message may further include timestamp information.

For specific content of the timestamp information, refer to the detailed descriptions in the method in FIG. 12. Details are not described again.

According to the foregoing technical solution, in the NTN scenario, after performing the measurement on the uplink positioning reference signal, the terminal device reports the difference between the propagation delay of the downlink positioning reference signal and the propagation delay of the reference downlink positioning reference signal, so that the first device accurately determines the location of the terminal device. Therefore, accuracy of the location of the terminal device is improved.

### Example 2

In S1530, the terminal device sends the third message to the first device.

In a possible implementation, the third message includes absolute time corresponding to a start location of a fifth subframe or absolute time at which the downlink positioning reference signal arrives. The fifth subframe is a downlink subframe in which the downlink positioning reference signal is located.

In this application, the absolute time may be represented by using a UTC time format, or may be represented by using time relative to 00:00 on January 1, 1900.

Optionally, the third message may further include timestamp information.

For specific content of the timestamp information, refer to the detailed descriptions in the method in FIG. 12. Details are not described again.

According to the foregoing technical solution, in a single-satellite scenario, the terminal device reports, to the network device having a positioning management function, the absolute time of the downlink subframe in which the downlink positioning reference signal is received or the absolute time at which the downlink positioning reference signal arrives, so that the network device determines the location information of the terminal device. Therefore, accuracy of the location of the terminal device is improved.

### Example 3

In S1530, the terminal device sends the third message to the first device.

In a possible implementation, the third message includes an offset between a start location of a sixth subframe and a start location of a seventh subframe. The sixth subframe is a subframe in which a positioning reference signal of a first network device is located. The seventh subframe is a subframe in which a positioning reference signal of a reference network device is located.

In a possible implementation, the third message includes a difference between absolute time at which the positioning reference signal of the first network device arrives and absolute time at which the positioning reference signal of the reference network device arrives.

The offset between the start location of the sixth subframe and the start location of the seventh subframe may be an offset between sending time of the sixth subframe (the downlink subframe in which the positioning reference signal of the first network device is located) and sending time of the seventh subframe (the downlink subframe in which the positioning reference signal of the reference network device is located).

The first network device may be understood as a base station or a TRP of a neighboring cell. The reference network device is a reference TRP or base station. The first network device and the reference network device are included in the network device that sends the downlink positioning reference signal.

FIG. 18 is a diagram of a frame structure that is applicable to an embodiment of this application and that is used to report the measurement result of the terminal device.

As shown in FIG. 18, the sixth subframe is a downlink subframe #0 in which the terminal receives the downlink positioning reference signal sent by the reference network device, the seventh subframe is a downlink subframe #0 in which the terminal device receives the downlink positioning reference signal sent by the first network device, and the offset between the start location of the sixth subframe and the start location of the seventh subframe is M shown in the figure. The difference between the absolute time at which the positioning reference signal of the first network device arrives and the absolute time at which the positioning reference signal of the reference network device arrives is N.

In a possible implementation, the offset M and the difference N may be represented by a frame, a subframe, and a subframe difference, and are represented in a same manner as that of the offset A. Details are not described herein again.

Optionally, the third message may further include timestamp information.

For specific content of the timestamp information, refer to the detailed descriptions in the method in FIG. 12. Details are not described again.

According to the foregoing technical solution, in a multi-satellite scenario, the terminal device reports, to the network device having a positioning management function, the offset between the downlink subframes in which the downlink positioning reference signals of the reference network device and the first network devices are received or the difference between the absolute time, so that the network device determines the location information of the terminal device. Therefore, accuracy of the location of the terminal device is improved.

It should be understood that another possible implementation of this embodiment of this application is similar to the method 1100 or the method 1500. For details, refer to the descriptions in the method 1100 or the method 1500. Details are not described herein again.

It should be understood that sequence numbers of the foregoing processes do not mean execution sequences. The execution sequence of the processes should be determined based on functions and internal logic of the processes, and should not be construed as any limitation on implementation processes of embodiments of this application.

The foregoing mainly describes the solutions provided in embodiments of this application from a perspective of interaction between network elements. It may be understood that, to implement the foregoing functions, each network element such as a transmitter device or a receiver device includes a corresponding hardware structure and/or software module for performing each function. A person skilled in the art may be aware that units and algorithm steps in the examples described with reference to embodiments disclosed in this specification may be implemented in a form of hardware or in a form of a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the transmitter device or the receiver device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

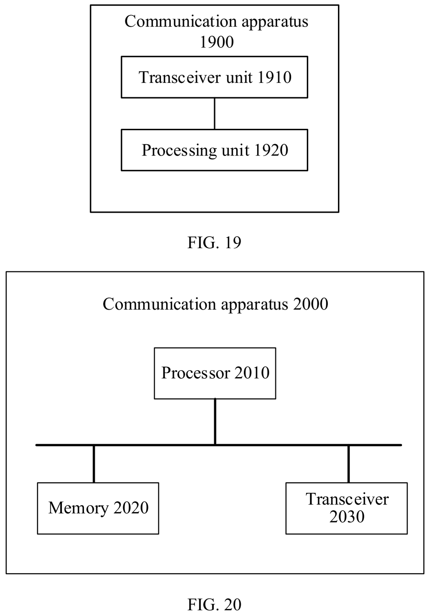

The foregoing describes in detail the method provided in embodiments of this application with reference to FIG. 11 to FIG. 18. The following describes in detail an apparatus provided in embodiments of this application with reference to FIG. 19 and FIG. 20. It should be understood that descriptions of apparatus embodiments correspond to the descriptions of the method embodiments. Therefore, for content that is not described in detail, refer to the method embodiments. For brevity, details are not described herein again.

FIG. 19 is a diagram of a structure of a communication apparatus according to an embodiment of this application.

The apparatus 1900 includes a transceiver unit 1910 and a processing unit 1920. The transceiver unit 1910 may be configured to implement a corresponding communication function. The processing unit 1920 may be configured to perform data processing.

Optionally, the transceiver unit 1910 may also be referred to as a communication interface or a communication unit, and includes a sending unit and/or a receiving unit. The transceiver unit 1910 may be a transceiver (including a transmitter and/or a receiver), an input/output interface (including an input and/or output interface), a pin, a circuit, or the like. The transceiver unit 1910 may be configured to perform a sending step and/or a receiving step in the foregoing method embodiments.

Optionally, the processing unit 1920 may be a processor (which may include one or more processors), a processing circuit having a processor function, or the like, and may be configured to perform a step other than sending and receiving in the foregoing method embodiments.

Optionally, the apparatus 1900 further includes a storage unit. The storage unit may be a memory, an internal storage unit (for example, a register or a cache), an external storage unit (for example, a read-only memory or a random access memory), or the like. The storage unit is configured to store instructions. The processing unit 1920 executes the instructions stored in the storage unit, to enable the communication apparatus to perform the foregoing method.

In a design, the apparatus 1900 may be configured to perform an action performed by the first device in each of the foregoing method embodiments. For example, the apparatus 1900 may be configured to perform an action performed by the first device in the foregoing method 1100 or 1500. In this case, the apparatus 1900 may be a component of the first device. The transceiver unit 1910 is configured to perform an operation related to receiving and sending on a first device side in the foregoing method embodiments. The processing unit 1920 is configured to perform a processing-related operation of the first device in the foregoing method embodiments.

For example, the transceiver unit 1910 is configured to receive a first message sent by a terminal device. The first message carries a result of measuring a downlink positioning reference signal by the terminal device. The first message includes an offset between a start location of a first subframe and a start location of a second subframe. The first subframe is a downlink subframe in which the downlink positioning reference signal is located. The second subframe is an uplink subframe that has a same frame number and a same subframe number as the first subframe and that is closest to the first subframe. Alternatively, the second subframe is an uplink subframe in which an uplink positioning reference signal sent by the terminal device is located. The processing unit 1920 is configured to determine location information of the terminal device based on the first message and a measurement result of the uplink positioning reference signal.

Optionally, the transceiver unit 1910 is further configured to receive a second message sent by a network device. The second message includes the measurement result of the uplink positioning reference signal. The second message includes an offset between a start location of a third subframe and a start location of a fourth subframe. The third subframe is an uplink subframe in which the uplink positioning reference signal is located. The fourth subframe is a downlink subframe that has a same frame number and a same subframe number as the third subframe and that is closest to the third subframe. Alternatively, the fourth subframe is a downlink subframe in which the downlink positioning reference signal sent by the network device is located.

For another example, the transceiver unit 1910 is configured to receive a third message sent by a terminal device. The third message carries a result of measuring a downlink positioning reference signal by the terminal device. The third message includes a difference between a propagation delay of the downlink positioning reference signal and a propagation delay of a reference downlink positioning reference signal. The processing unit 1920 is configured to determine location information of the terminal device based on the third message.

It should be understood that the transceiver unit 1910 and the processing unit 1920 may further perform other operations performed by the first device in any one of the method 1100 and the method 1500. Details are not described herein again.

In a design, the apparatus 1900 may be configured to perform an action performed by the terminal device in each of the foregoing method embodiments. For example, the apparatus 1900 may be configured to perform an action performed by the terminal device in the foregoing method 1100 and method 1500. In this case, the apparatus 1900 may be a component of the terminal device. The transceiver unit 1910 is configured to perform an operation related to receiving and sending on a terminal device side in the foregoing method embodiments. The processing unit 1920 is configured to perform a processing-related operation on the terminal device side in the foregoing method embodiments.

For example, the transceiver unit 1910 is configured to perform a measurement on a downlink positioning reference signal of a network device. The processing unit 1920 is configured to send a first message to a first device. The first message carries a result of the measurement. The first message includes an offset between a start location of a first subframe and a start location of a second subframe. The first subframe is a downlink subframe in which the downlink positioning reference signal is located. The second subframe is an uplink subframe that has a same frame number and a same subframe number as the first subframe and that is closest to the first subframe. Alternatively, the second subframe is an uplink subframe in which an uplink positioning reference signal sent by the terminal device is located. The first message is used by the first device to determine location information of the terminal device.

For example, the processing unit 1920 is configured to perform a measurement on a downlink positioning reference signal of a network device. The transceiver unit 1910 is configured to send a third message to a first device. The third message carries a result of the measurement. The third message includes a difference between a propagation delay of the downlink positioning reference signal and a propagation delay of a reference downlink positioning reference signal. The third message is used by the first device to determine location information of the terminal device.

For example, the processing unit 1920 is configured to perform a measurement on a downlink positioning reference signal of a network device. The transceiver unit 1910 is configured to send a third message to a first device. The third message carries a result of the measurement. The third message includes absolute time corresponding to a start location of a fifth subframe or absolute time at which the downlink positioning reference signal arrives. The fifth subframe is a downlink subframe in which the downlink positioning reference signal is located. The third message is used by the first device to determine location information of the terminal device.

For example, the processing unit 1920 is configured to perform a measurement on a downlink positioning reference signal of a network device. The transceiver unit 1910 is configured to send a third message to a first device. The third message carries a result of the measurement. The third message includes an offset between a start location of a sixth subframe and a start location of a seventh subframe, where the sixth subframe is a subframe in which a positioning reference signal of a first network device is located, and the seventh subframe is a subframe in which a positioning reference signal of a reference network device is located. Alternatively, the third message includes a difference between absolute time at which positioning reference information of a first network device arrives and absolute time at which a positioning reference signal of a reference network device arrives. The third message is used by the first device to determine location information of the terminal device. The first network device is a serving network device of the terminal device.

It should be understood that the transceiver unit 1910 and the processing unit 1920 may further perform other operations performed by the terminal device in any one of the method 1100 and the method 1500. Details are not described herein again.

In a design, the apparatus 1900 may be configured to perform an action performed by the network device in each of the foregoing method embodiments. For example, the apparatus 1900 may be configured to perform an action performed by the network device in the foregoing method 1100 and method 1500. In this case, the apparatus 1900 may be a component of the network device. The transceiver unit 1910 is configured to perform an operation related to receiving and sending on a network device side in the foregoing method embodiments. The processing unit 1920 is configured to perform a processing-related operation on the network device side in the foregoing method embodiments.

For example, the transceiver unit 1910 is configured to perform a measurement on an uplink positioning reference signal of a terminal device. The processing unit 1920 is configured to send a second message to a first device. The second message carries a result of the measurement. The second message includes an offset between a start location of a third subframe and a start location of a fourth subframe. The third subframe is an uplink subframe in which the uplink positioning reference signal is located. The fourth subframe is a downlink subframe that has a same frame number and a same subframe number as the third subframe and that is closest to the third subframe. Alternatively, the fourth subframe is a downlink subframe in which a downlink positioning reference signal sent by the network device is located. The second message is used by the first device to determine location information of the terminal device.

It should be understood that the apparatus 1900 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1900 may be specifically the network device in the foregoing embodiments, and may be configured to perform each procedure and/or step corresponding to the network device in the foregoing method embodiments. To avoid repetition, details are not described herein again.

The apparatus 1900 in the foregoing solutions has a function of implementing a corresponding step performed by the device in the foregoing methods, or the apparatus 1900 in the foregoing solutions has a function of implementing a corresponding step performed by the network device in the foregoing methods. The function may be implemented by hardware, or may be implemented by executing corresponding software by hardware. The hardware or software includes one or more modules corresponding to the foregoing function. For example, a transceiver unit may alternatively be a transceiver (for example, a sending unit in the transceiver unit may alternatively be a transmitter, and a receiving unit in the transceiver unit may alternatively be a receiver), and another unit such as a processing unit may alternatively be a processor, to separately perform sending and receiving operations and a related processing operation in the method embodiments.

In addition, the transceiver unit 1910 may alternatively be a transceiver circuit (for example, the transceiver circuit may include a receiver circuit and a transmitter circuit), and the processing unit may be a processing circuit.

It should be noted that the apparatus in FIG. 19 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 20 is a diagram of a communication architecture according to an embodiment of this application. A communication apparatus 2000 shown in FIG. 20 includes a processor 2010, a memory 2020, and a transceiver 2030. The processor 2010 is coupled to the memory 2020, and is configured to execute instructions stored in the memory 2020, to control the transceiver 2030 to send a signal and/or receive a signal.

It should be understood that the processor 2010 and the memory 2020 may be combined into one processing apparatus. The processor 2010 is configured to execute program code stored in the memory 2020, to implement the foregoing function. In specific implementation, the memory 2020 may alternatively be integrated into the processor 2010, or may be independent of the processor 2010. It should be understood that the processor 2010 may alternatively correspond to each processing unit in the foregoing communication apparatus, and the transceiver 2030 may correspond to each receiving unit and sending unit in the foregoing communication apparatus.

It should be further understood that the transceiver 2030 may include a receiver (or referred to as a receiver machine) and a transmitter (or referred to as a transmitter machine). The transceiver may further include an antenna, and there may be one or more antennas. The transceiver may alternatively be a communication interface or an interface circuit.

Specifically, the communication apparatus 2000 may correspond to the terminal device in the method 1100 or the method 1500 according to embodiments of this application. The communication apparatus 2000 may include units for the method performed by the first device in the method 1100 or the method 1500. It should be understood that a specific process in which the units perform the foregoing corresponding steps is described in detail in the foregoing method embodiments, and for brevity, details are not described herein.

When the communication apparatus 2000 is a chip, the chip includes an interface unit and a processing unit. The interface unit may be an input/output circuit or a communication interface. The processing unit may be a processor, a microprocessor, or an integrated circuit integrated on the chip.

In an implementation process, steps in the foregoing methods can be implemented by using a hardware integrated logical circuit in the processor, or by using instructions in a form of software. The steps of the method disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, steps, and logical block diagrams in embodiments of this application may be implemented or performed. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state disk (solid state disk, SSD)), or the like.

In embodiments of this application, the term such as "example" or "for example" is for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that in this application, "when" and "if" mean that the UE or the base station performs corresponding processing in an objective situation, are not intended to limit time, do not require the UE or the base station to necessarily perform a determining action during implementation, and do not mean another limitation.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." in this specification represents all or any combination of listed items. For example, "at least one of A, B, and C" may represent the following six cases: Only A exists, Only B exists, Only C exists, both A and B exist, both B and C exist, and all A, B, and C exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiment described above is merely an example. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A positioning method for an NTN, wherein the method comprises:
receiving a first message sent by a terminal device, wherein the first message carries a result of measuring a downlink positioning reference signal by the terminal device, the first message comprises an offset between a start location of a first subframe and a start location of a second subframe, the first subframe is a downlink subframe in which the downlink positioning reference signal is located, and the second subframe is an uplink subframe that has a same frame number and a same subframe number as the first subframe and that is closest to the first subframe, or the second subframe is an uplink subframe in which an uplink positioning reference signal sent by the terminal device is located; and
determining location information of the terminal device based on the first message and a measurement result of the uplink positioning reference signal.

2. The method according to claim 1, wherein the method further comprises:
receiving a second message sent by a network device, wherein the second message comprises the measurement result of the uplink positioning reference signal, the second message comprises an offset between a start location of a third subframe and a start location of a fourth subframe, the third subframe is an uplink subframe in which the uplink positioning reference signal is located, and the fourth subframe is a downlink subframe that has a same frame number and a same subframe number as the third subframe and that is closest to the third subframe, or the fourth subframe is a downlink subframe in which the downlink positioning reference signal sent by the network device is located.

3. A positioning method for an NTN, wherein the method comprises:
performing a measurement on a downlink positioning reference signal of a network device; and
sending a first message to a first device, wherein the first message carries a result of the measurement, the first message comprises an offset between a start location of a first subframe and a start location of a second subframe, the first subframe is a downlink subframe in which the downlink positioning reference signal is located, the second subframe is an uplink subframe that has a same frame number and a same subframe number as the first subframe and that is closest to the first subframe, or the second subframe is an uplink subframe in which an uplink positioning reference signal sent by a terminal device is located, and the first message is used by the first device to determine location information of the terminal device.

4. A positioning method for an NTN, wherein the method comprises:
performing a measurement on an uplink positioning reference signal of a terminal device; and
sending a second message to a first device, wherein the second message carries a result of the measurement, the second message comprises an offset between a start location of a third subframe and a start location of a fourth subframe, the third subframe is an uplink subframe in which the uplink positioning reference signal is located, the fourth subframe is a downlink subframe that has a same frame number and a same subframe number as the third subframe and that is closest to the third subframe, or the fourth subframe is a downlink subframe in which a downlink positioning reference signal sent by a network device is located, and the second message is used by the first device to determine location information of the terminal device.

5. A positioning method for an NTN, wherein the method comprises:
receiving a third message sent by a terminal device, wherein the third message carries a result of measuring a downlink positioning reference signal by the terminal device, and the third message comprises a difference between a propagation delay of the downlink positioning reference signal and a propagation delay of a reference downlink positioning reference signal; and
determining location information of the terminal device based on the third message.

6. A positioning method for an NTN, wherein the method comprises:
performing a measurement on a downlink positioning reference signal of a network device; and
sending a third message to a first device, wherein the third message carries a result of the measurement, the third message comprises a difference between a propagation delay of the downlink positioning reference signal and a propagation delay of a reference downlink positioning reference signal, and the third message is used by the first device to determine location information of the terminal device.

7. The method according to any one of claims 1 to 6, wherein the downlink positioning reference signal is a positioning reference signal PRS, and the uplink positioning reference signal is a channel sounding reference signal SRS.

8. The method according to claim 6 or 7, wherein the method further comprises:
determining the difference between the propagation delay of the downlink positioning reference signal and the propagation delay of the reference downlink positioning reference signal, comprising:
determining the propagation delay of the downlink positioning reference signal based on absolute time at which the network device sends the downlink positioning reference signal and absolute time at which the terminal device receives the downlink positioning reference signal.

9. The method according to claim 8, wherein the method further comprises:
receiving configuration information of the downlink positioning reference signal; and
determining, based on the configuration information of the downlink positioning reference signal, the absolute time at which the network device sends the downlink positioning reference signal.

10. The method according to claim 8, wherein the method further comprises:
receiving time sequence information of the network device; and
determining, based on the time sequence information of the network device and configuration information of the downlink positioning reference signal, the absolute time at which the access network device sends the downlink positioning reference signal.

11. The method according to any one of claims 1 to 10, wherein the method further comprises:
sending timestamp information to the first device, wherein the timestamp information comprises any one of the following: a system frame number and a subframe number that are of a reference network device and that correspond to start time of a subframe in which the downlink positioning reference signal is received, a system frame number and a subframe number that are of the reference access network device and that correspond to a moment at which the downlink positioning reference signal is received, and a system frame number and a subframe number that are of the reference network device and that correspond to a subframe in which the uplink positioning reference signal is sent.

12. The method according to any one of claims 6 to 11, wherein the method further comprises:
receiving a first request message from the first device; and
performing the measurement on the downlink positioning reference signal based on the first request message.

13. The method according to claim 12, wherein the first device comprises the network device or a location management function.

14. A positioning apparatus for an NTN, wherein the apparatus comprises:
a transceiver unit, configured to receive a first message sent by a terminal device, wherein the first message carries a result of measuring a downlink positioning reference signal by the terminal device, the first message comprises an offset between a start location of a first subframe and a start location of a second subframe, the first subframe is a downlink subframe in which the downlink positioning reference signal is located, and the second subframe is an uplink subframe that has a same frame number and a same subframe number as the first subframe and that is closest to the first subframe, or the second subframe is an uplink subframe in which an uplink positioning reference signal sent by the terminal device is located; and
a processing unit, configured to determine location information of the terminal device based on the first message and a measurement result of the uplink positioning reference signal.

15. The apparatus according to claim 14, wherein the transceiver unit is further configured to:
receive a second message sent by a network device, wherein the second message comprises the measurement result of the uplink positioning reference signal, the second message comprises an offset between a start location of a third subframe and a start location of a fourth subframe, the third subframe is an uplink subframe in which the uplink positioning reference signal is located, and the fourth subframe is a downlink subframe that has a same frame number and a same subframe number as the third subframe and that is closest to the third subframe, or the fourth subframe is a downlink subframe in which the downlink positioning reference signal sent by the network device is located.

16. A positioning apparatus for an NTN, wherein the apparatus comprises:
a processing unit, configured to perform a measurement on a downlink positioning reference signal of a network device; and
a transceiver unit, configured to send a first message to a first device, wherein the first message carries a result of the measurement, the first message comprises an offset between a start location of a first subframe and a start location of a second subframe, the first subframe is a downlink subframe in which the downlink positioning reference signal is located, the second subframe is an uplink subframe that has a same frame number and a same subframe number as the first subframe and that is closest to the first subframe, or the second subframe is an uplink subframe in which an uplink positioning reference signal sent by a terminal device is located, and the first message is used by the first device to determine location information of the terminal device.

17. A positioning apparatus for an NTN, wherein the apparatus comprises:
a processing unit, configured to perform a measurement on an uplink positioning reference signal of a terminal device; and
a transceiver unit, configured to send a second message to a first device, wherein the second message carries a result of the measurement, the second message comprises an offset between a start location of a third subframe and a start location of a fourth subframe, the third subframe is an uplink subframe in which the uplink positioning reference signal is located, the fourth subframe is a downlink subframe that has a same frame number and a same subframe number as the third subframe and that is closest to the third subframe, or the fourth subframe is a downlink subframe in which a downlink positioning reference signal sent by a network device is located, and the second message is used by the first device to determine location information of the terminal device.

18. A positioning apparatus for an NTN, wherein the apparatus comprises:
a transceiver unit, configured to receive a third message sent by a terminal device, wherein the third message carries a result of measuring a downlink positioning reference signal by the terminal device, and the third message comprises a difference between a propagation delay of the downlink positioning reference signal and a propagation delay of a reference downlink positioning reference signal; and
a processing unit, configured to determine location information of the terminal device based on the third message.

19. A positioning apparatus for an NTN, wherein the apparatus comprises:
a processing unit, configured to perform a measurement on a downlink positioning reference signal of a network device; and
a transceiver unit, configured to send a third message to a first device, wherein the third message carries a result of the measurement, the third message comprises a difference between a propagation delay of the downlink positioning reference signal and a propagation delay of a reference downlink positioning reference signal, and the third message is used by the first device to determine location information of the terminal device.

20. The apparatus according to any one of claims 14 to 19, wherein the downlink positioning reference signal is a positioning reference signal PRS, and the uplink positioning reference signal is a channel sounding reference signal SRS.

21. The apparatus according to claim 19 or 20, wherein the processing unit is specifically configured to:
determine the difference between the propagation delay of the downlink positioning reference signal and the propagation delay of the reference downlink positioning reference signal, comprising:
determining the propagation delay of the downlink positioning reference signal based on absolute time at which the network device sends the downlink positioning reference signal and absolute time at which the terminal device receives the downlink positioning reference signal.

22. The apparatus according to claim 21, wherein the transceiver unit is further configured to receive configuration information of the downlink positioning reference signal; and the processing unit is further configured to determine, based on the configuration information of the downlink positioning reference signal, the absolute time at which the network device sends the downlink positioning reference signal.

23. The apparatus according to claim 21, wherein the transceiver unit is further configured to receive time sequence information of the access network device; and the processing unit is further configured to determine, based on the time sequence information of the network device and configuration information of the downlink positioning reference signal, the absolute time at which the network device sends the downlink positioning reference signal.

24. The apparatus according to any one of claims 14 to 23, wherein the transceiver unit is further configured to:
send, by the terminal device, timestamp information to the first device, wherein the timestamp information comprises any one of the following: a system frame number and a subframe number that are of a reference network device and that correspond to start time of a subframe in which the downlink positioning reference signal is received, a system frame number and a subframe number that are of the reference network device and that correspond to a moment at which the downlink positioning reference signal is received, and a system frame number and a subframe number that are of the reference network device and that correspond to a subframe in which the uplink positioning reference signal is sent.

25. The apparatus according to any one of claims 19 to 24, wherein the transceiver unit is further configured to receive a first request message from the first device; and the processing unit is configured to perform the measurement on the downlink positioning reference signal based on the first request message.

26. The apparatus according to claim 25, wherein the first device comprises the network device or a location management function network element.

27. A communication apparatus, comprising a processor and an interface circuit, wherein the interface circuit is configured to: receive computer code or instructions, and transmit the computer code or the instructions to the processor; and when the processor runs the computer code or the instructions, the method according to any one of claims 1 to 13 is performed.

28. A communication apparatus, comprising at least one processor, wherein the at least one processor is coupled to at least one memory, and the at least one processor is configured to execute a computer program or instructions stored in the at least one memory, to perform the method according to any one of claims 1 to 13.

29. A computer-readable storage medium, wherein the computer-readable storage medium stores computer instructions, and when the computer instructions are run on a computer, the method according to any one of claims 1 to 13 is performed.

30. A computer program product, wherein when the computer program product is run on a computer, the computer is enabled to perform the steps of the method according to any one of claims 1 to 13.
